# EUROPEAN PATENT SPECIFICATION

(11) **EP 4 407 283 B1**
(45) Date of publication and mention of the grant of the patent: **03.12.2025**
(21) Application number: 22872633.7
(22) Date of filing: 24.08.2022
(51) Int. Cl.: G01H 3/00, G01H 3/08, G01H 17/00, G01M 99/00

(54) **ABNORMAL SOUND DETECTION DEVICE**
VORRICHTUNG ZUR ERKENNUNG VON ABNORMALEN GERÄUSCHEN
DISPOSITIF DE DÉTECTION DE SON ANORMAL

(30) Priority: 24.09.2021 JP 2021155733
(43) Date of publication of application: 31.07.2024
(60) Divisional application: 25171276.6
(73) Proprietor: DENSO CORPORATION, Kariya-city, Aichi-pref., 448-8661 (JP)
(72) Inventor: KAWAI Tetsuto, Kariya-city, Aichi-pref. 448-8661 (JP); MAWATARI Kazuaki, Kariya-city, Aichi-pref. 448-8661 (JP)
(74) Representative: Winter, Brandl - Partnerschaft mbB
(86) International application number: PCT/JP2022/031893
(87) International publication number: WO 2023/047877

(56) References cited:
- WO-A1-2015/068446
- WO-A1-2020/026829
- WO-A1-2020/255446
- WO-A1-2021/077567
- JP-A- 2005 215 833
- JP-A- 2018 179 863
- JP-A- 2018 179 863
- JP-A- H09 166 483
- JP-A- H09 166 483

## Description

### TECHNICAL FIELD

The present disclosure relates to an abnormal sound detection device detecting abnormal sound of a target apparatus as an object to be inspected.

### BACKGROUND ART

Conventionally, there is known an abnormality occurrence cause specifying system specifying the cause of occurrence of abnormal sound included in sound generated from a target apparatus by analyzing the generated sound (refer to, for example, JP 2021- 081 364 A). The abnormality occurrence cause specifying system generates division data obtained by dividing sound pressure data of sound including abnormal sound every predetermined time, and specifies the cause of occurrence of the abnormal sound on the basis of the degree of abnormality obtained from FFT data of the division data.

However, in the case where abnormal sound which is generated due to abnormality of a target apparatus and included in sound generated from the target apparatus is slight, for instance, immediately after the beginning of the occurrence of abnormality, the magnitude of the sound pressure signal of the abnormal sound at the time of analyzing sound pressure data is small. In the case where abnormal sound included in sound generated from a target apparatus is slight as described above, it is difficult to detect occurrence of abnormal sound in an abnormal sound detection device detecting abnormal sound by analyzing sound generated from the target apparatus such as the abnormality occurrence cause specifying system described in JP 2021- 081 364 A.

WO 2021 / 077 567 A1 discloses a device failure detection method, a device failure detection apparatus and a computer storage medium, wherein method comprises: transmitting a measurement beam to a target device, and collecting a detection beam reflected by the measurement beam via a target device; extracting a vibration signal from the detection beam; and inputting the vibration signal to a trained fault learning model to identify the fault type associated with the vibration signal, so as to determine the fault type of a target device.

JP H09 166483 relates to an acoustic sensor (20) to detect acoustic signals from an object (10) under surveillance. The frequency spectrum of output of sensor is analyzed in an analysis part (30). The analysis result, during normal operational sequence is stored into a memory (40). This normal state corresponding frequency spectrum obtained through previous step, is subtracted, from output of analysis part in a subtraction part (50). Known amount of noise pattern is retrieved from a storage part (60) and subtracted from the output of the subtraction part. The result is analyzed in an operation part (70), in order to evaluate existence of extra ordinary noise component which in turn indicates existence of abnormality.

It is an object of the present disclosure to provide an abnormal sound detection device capable of detecting even slight abnormal sound. The object is solved by the subject matter of claim 1. Advantageous further developments are indicated in the dependent claims.

According to the present invention, by determining whether or not abnormal sound is included in operation sound of a target apparatus on the basis of an abnormal sound emphasized signal obtained by emphasizing intensity of a sound pressure signal at a frequency related to abnormal sound of the target apparatus, even when the abnormal sound included in the operation sound of the target apparatus is slight, the abnormal sound can be detected.

A parenthesized reference numeral added to each component or the like indicates an example of a corresponding relation of the component and a concrete component or the like described in a following embodiment.

### BRIEF DESCRIPTION OF THE DRAWINGS

FIG. 1 is a schematic configuration diagram of an abnormal sound detection device according to a first embodiment.
FIG. 2 is a diagram illustrating an example of a sound pressure time signal.
FIG. 3 is a schematic configuration diagram of an EQ unit according to the first embodiment.
FIG. 4 is a diagram illustrating an example of a frequency characteristic.
FIG. 5 is a diagram illustrating an example of an abnormal sound template.
FIG. 6 is a diagram illustrating an example of an abnormal sound emphasized characteristic.
FIG. 7 is a diagram illustrating an example of an emphasized sound signal.
FIG. 8 is a diagram for explaining control process executed by the EQ unit according to the first embodiment.
FIG. 9 is a schematic configuration diagram of an abnormal sound detection device according to a second embodiment.
FIG. 10 is a diagram illustrating an example of a cutting abnormal template.
FIG. 11 is a diagram for explaining control process executed by the EQ unit according to the second embodiment.
FIG. 12 is a diagram illustrating an example of the frequency characteristic.
FIG. 13 is a diagram illustrating an example of a first motor emphasized characteristic.
FIG. 14 is a diagram illustrating an example of a second motor emphasized characteristic.
FIG. 15 is a diagram illustrating an example of a cutting emphasized characteristic.
FIG. 16 is a schematic configuration diagram of an abnormal sound detection device according to a third embodiment.
FIG. 17 is a schematic configuration diagram of the EQ unit according to the third embodiment.
FIG. 18 is a diagram illustrating a setting unit of an input device according to the third embodiment.
FIG. 19 is a diagram for explaining control process executed by the EQ unit according to the third embodiment.
FIG. 20 is a diagram illustrating an example of the first motor emphasized characteristic.
FIG. 21 is a diagram illustrating an example of the second motor emphasized characteristic.
FIG. 22 is a diagram illustrating an example of the cutting emphasized characteristic.
FIG. 23 is a diagram illustrating the setting unit of the input device according to a modification of the third embodiment.

### DESCRIPTION OF EMBODIMENTS

Hereinafter, embodiments of the present disclosure will be described with reference to the drawings, wherein the first and second embodiments serve to provide an understanding of the present invention. In the following embodiments, the same reference numeral is designated to a part which is the same as or equivalent to an item described in a preceding embodiment, and repetitive description may not be given. In the case of describing only a part of a component in an embodiment, description of the component in a preceding embodiment can be applied to the other part of the component. In the following embodiments, as long as no hindrance occurs in a combination, even in the case where it is not explicitly described, embodiments can be partially combined.

### (First embodiment)

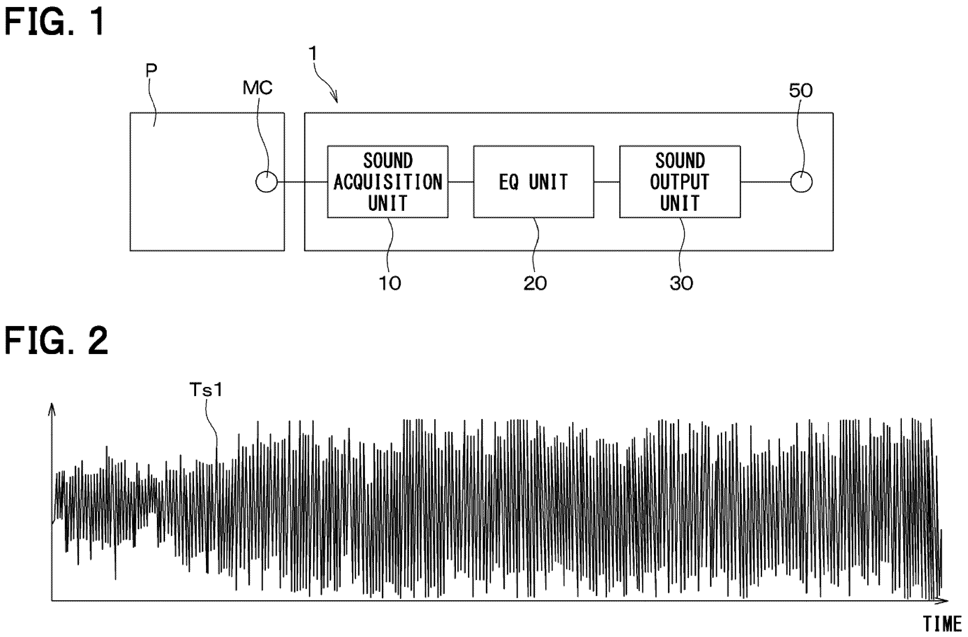

An embodiment will be described with reference to FIGS. 1 to 8. An abnormal sound detection device 1 of the present embodiment is a device determining whether or not abnormal sound is included in operation sound of a target apparatus P as an object to be inspected on the basis of the operation sound. The target apparatus P is, for example, an instrument mounted in a factory. Abnormal sound denotes sound generated when the target apparatus P operates in an abnormal state which is not a normal state. As illustrated in FIG. 1, the abnormal sound detection device 1 has a sound acquisition unit 10, an EQ unit 20, a sound output unit 30, and a speaker 50. The abnormal sound detection device 1 obtains operation sound of the target apparatus P from a microphone MC provided on the outside of the abnormal sound detection device 1.

The microphone MC is a sound detection unit detecting operation sound of the target apparatus P as an abnormal sound detection object and outputting a signal corresponding to the detected operation sound as a sound pressure signal to the outside. The microphone MC is mounted in the target apparatus P, and transmits a sound pressure signal according to the operation sound of the target apparatus P as an analog signal to the sound acquisition unit 10, for example, every predetermined cycle.

The sound acquisition unit 10 is an interface unit receiving the sound pressure signal according to the operation sound, which is transmitted from the microphone MC. The sound acquisition unit 10 samples analog signals transmitted from the microphone MC at predetermined sampling intervals to convert the analog signals to digital signals. The sound acquisition unit 10 obtains operation sound generated when the target apparatus P operates as a sound pressure time signal Ts1 which is a time signal indicating a time variation of intensity of the sound pressure signal. The sound pressure time signal Ts1 includes, as illustrated in FIG. 2, information of intensity changes in the sound pressure signal with the lapse of time. The sound acquisition unit 10 outputs the obtained sound pressure time signal Ts1 to the EQ unit 20.

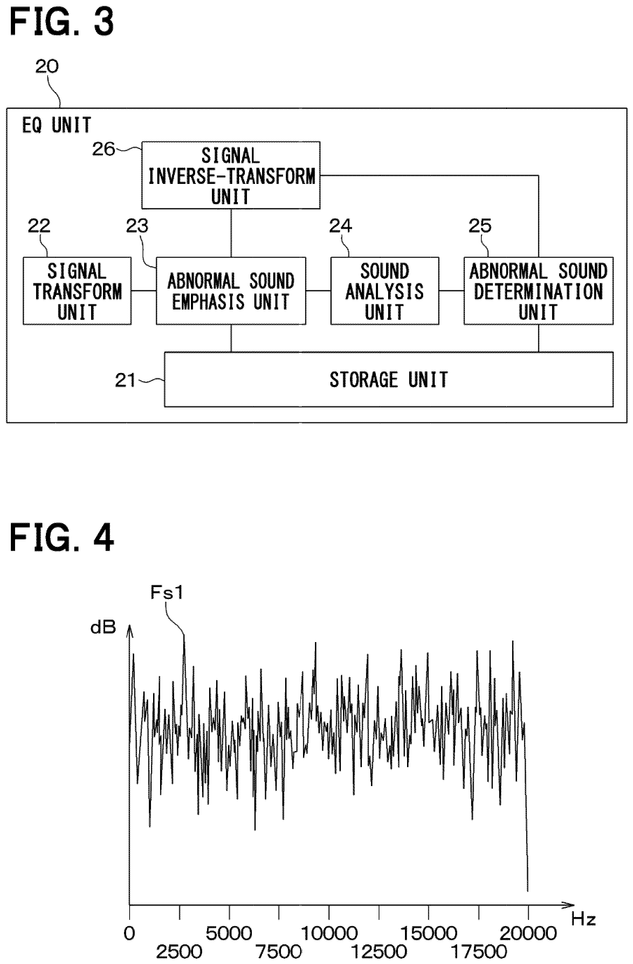

The EQ unit 20 is configured as a computer having a CPU and so on. The EQ unit 20 includes, as illustrated in FIG. 3, a storage unit 21, a signal transform unit 22, an abnormal sound emphasis unit 23, a sound analysis unit 24, an abnormal sound determination unit 25, and a signal inverse-transform unit 26. The storage unit 21 includes a RAM, a ROM, a writable nonvolatile storage medium, and the like. Each of the RAM, the ROM, and the writable nonvolatile storage medium is a non-transitory tangible storage medium. In the storage unit 21, a program for making the signal transform unit 22, the abnormal sound emphasis unit 23, the sound analysis unit 24, the abnormal sound determination unit 25, and the signal inverse-transform unit 26 execute processes and information regarding the operation sound of the target apparatus P, which will be described later are stored in advance.

The signal transform unit 22, the abnormal sound emphasis unit 23, the sound analysis unit 24, the abnormal sound determination unit 25, and the signal inverse-transform unit 26 are devices executing processes according to the program stored in the ROM or the writable nonvolatile storage medium in the storage unit 21. At the time of executing the program, the signal transform unit 22, the abnormal sound emphasis unit 23, the sound analysis unit 24, the abnormal sound determination unit 25, and the signal inverse-transform unit 26 use the RAM in the storage unit 21 as a work area.

That is, by executing the program stored in the storage unit 21, the EQ unit 20 functions as the signal transform unit 22, the abnormal sound emphasis unit 23, the sound analysis unit 24, the abnormal sound determination unit 25, and the signal inverse-transform unit 26. The EQ unit 20 may have a plurality of circuit modules corresponding to, on a one-to-one basis, the storage unit 21, the signal transform unit 22, the abnormal sound emphasis unit 23, the sound analysis unit 24, the abnormal sound determination unit 25, and the signal inverse-transform unit 26.

The signal transform unit 22 transforms the sound pressure time signal Ts1 transmitted from the sound acquisition unit 10 to a signal indicating the intensity of the sound pressure signal at each frequency. Concretely, as illustrated in FIG. 4, the signal transform unit 22 transforms the sound pressure time signal Ts1 which is input to a frequency characteristic Fs1 indicating the intensity of the sound pressure signal at each frequency by extracting the signal only by time of a predetermined length and performing short-time Fourier transform.

The signal transform unit 22 of the embodiment transforms the sound pressure time signal Ts1 to intensity of a sound pressure signal at each frequency in the frequency band from 0 Hz to 20000 Hz as the frequency which is generally regarded as an almost maximum value of the audible area. The frequency characteristic Fs1 illustrated in FIG. 4 is an example that information of the magnitude of the sound pressure signal of the operation sound of the target apparatus P and the magnitude of the sound pressure signal of abnormal sound included in the operation sound is included.

The abnormal sound emphasis unit 23 emphasizes the intensity of the sound pressure signal at the frequency related to the abnormal sound of the target apparatus P in the sound pressure signal at each frequency in the frequency characteristic Fs1 transformed by the signal transform unit 22. The abnormal sound emphasis unit 23 emphasizes the intensity of the sound pressure signal at the frequency related to the abnormal sound of the target apparatus P which is preliminarily determined in the storage unit 21 in the frequencies of 0 to 20000 Hz in the frequency characteristic Fs1.

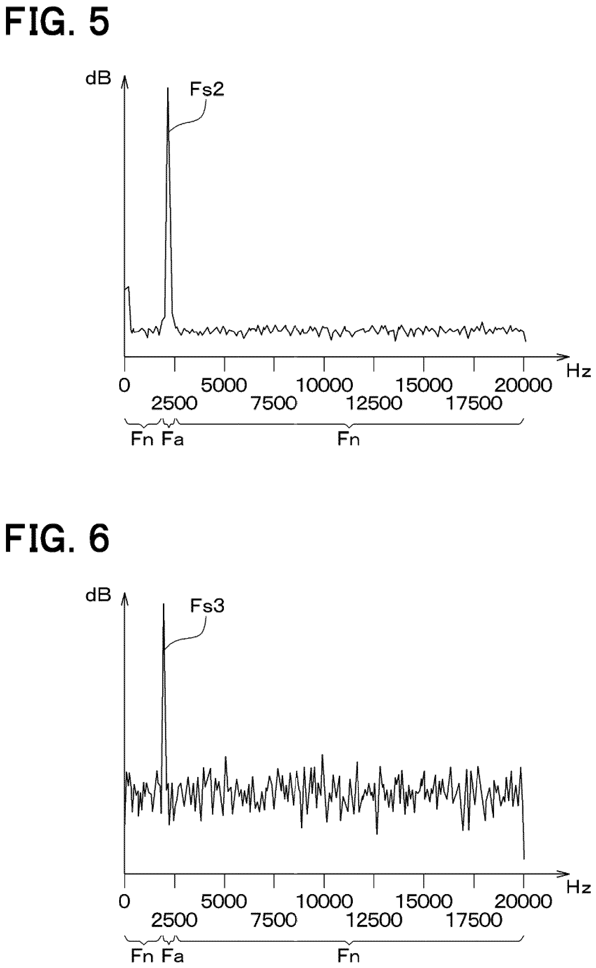

In the storage unit 21, as information related to abnormal sound included in the operation sound of the target apparatus P, information of a sound pressure signal indicated in FIG. 5 related to actual operation sound in the case where abnormal sound is included in the operation sound of the target apparatus P is stored. Concretely, in the storage unit 21, information of an abnormal sound template Fs2 is preliminarily stored, which is obtained by transforming operation sound actually including abnormal sound of the target apparatus P to a sound pressure signal at each of frequencies of 0 to 20000 Hz in a manner similar to the frequency characteristic Fs1 and emphasizing a sound pressure signal at a frequency included in the abnormal sound. That is, the abnormal sound template Fs2 is based on the operation sound in the case where the target apparatus P is in an abnormal state.

In addition, in the storage unit 21, a feature amount related to the intensity of the sound pressure signal of the abnormal sound template Fs2 is preliminarily stored. Concretely, in the storage unit 21, information of a template vector Vt obtained by transforming the intensity of the sound pressure signal at each of the frequencies indicated by the abnormal sound template Fs2 to a future vector is preliminarily stored.

In the storage unit 21, information of a frequency at which a sound pressure signal is relatively large as compared with other frequencies in the frequency band of 0 to 20000 Hz in the abnormal sound template Fs2 is also preliminarily stored. The frequency at which the sound pressure signal is relatively large as compared with the other frequencies in the abnormal sound template Fs2 is a frequency included in the abnormal sound, in frequencies included in the operation sound of the target apparatus P.

An abnormal sound included in the operation sound of the target apparatus P occurs when the target apparatus P operates in the abnormal state, not in the normal state. The possibility that an abnormal sound generated when the target apparatus P operates in the abnormal state includes a relatively similar frequency each time the target apparatus P enters the abnormal state from the normal state is high. Consequently, in the abnormal sound template Fs2 which is set on the basis of the operation sound in the case where the target apparatus P is in the abnormal state, the frequency at which a sound pressure signal is relatively large as compared with the other frequencies is a frequency estimated to be included in abnormal sound at the time the target apparatus P enters the abnormal state from the normal state. The abnormal sound template Fs2 corresponds to abnormal sound information. The template vector Vt corresponds to an estimated feature amount.

Hereinafter, in the frequency band in the abnormal sound template Fs2, a frequency at which a sound pressure signal is relatively large as compared with the other frequencies will be also called an abnormal sound frequency Fa, and the frequencies different from the abnormal sound frequency Fa will be also called normal frequencies Fn.

In the embodiment, for example, the abnormal sound frequencies Fa are set in a frequency band having a predetermined bandwidth whose center is the frequency at which the sound pressure signal becomes the maximum in the abnormal sound template Fs2. The predetermined bandwidth is preliminarily determined and set to, for example, 100 Hz.

Consequently, in the case where the frequency at which the sound pressure signal becomes the maximum in the abnormal sound template Fs2 illustrated in FIG. 5 is 2400 Hz, the abnormal sound frequencies Fa are set in a frequency band having a band width of 2350 Hz to 2450 Hz, in the band of 0 to 20000 Hz. The normal frequencies Fn are set in a frequency band smaller than 2350 Hz and a frequency band larger than 2450 Hz, in the band of 0 to 20000 Hz.

The predetermined bandwidth may be set to a bandwidth smaller than 100 Hz or a bandwidth larger than 100 Hz. The predetermined bandwidth is properly set in the abnormal sound template Fs2.

The information of each of the abnormal sound template Fs2, the template vector Vt, the abnormal sound frequencies Fa, and the normal frequencies Fn is obtained from, for instance, a result of an experiment of collecting operation sound including actual abnormal sound when the target apparatus P is operated in the abnormal state and performing sound analysis. In the abnormal sound detection device 1, the information of each of the abnormal sound template Fs2, the template vector Vt, the abnormal sound frequencies Fa, and the normal frequencies Fn obtained from, for instance, a result of an experiment conducted in advance before execution of abnormal sound detection is stored in the storage unit 21.

In the abnormal sound template Fs2 illustrated in FIG. 5, to emphasize a sound pressure signal of a frequency estimated to be included in abnormal sound, at the time of indicating a sound pressure signal of actual operation sound including the abnormal sound by a sound pressure signal at each frequency, the sound pressure signal at the abnormal sound frequency Fa is increased only by a predetermined increase amount. Further, in the abnormal sound template Fs2, to emphasize a sound pressure signal of a frequency included in abnormal sound, at the time of indicating a sound pressure signal of actual operation sound including the abnormal sound by a sound pressure signal at each frequency, the sound pressure signal at the normal frequency Fn is decreased only by a predetermined decrease amount. By the above operation, in the abnormal sound template Fs2 illustrated in FIG. 5, the sound pressure signals at the frequencies included in the abnormal sound are emphasized in the sound pressure signals of the actual operation sound including the abnormal sound.

A predetermined increase amount and a predetermined decrease amount for emphasizing a sound pressure signal at a frequency estimated to be included in abnormal sound are set in advance as values capable of emphasizing the intensity of the sound pressure signals at the abnormal sound frequencies Fa among the frequencies in the frequency characteristic Fs1. The absolute value of the predetermined increase amount and that of the predetermined decrease amount may be set to the same value or values different from each other.

When the abnormal sound detection device 1 determines whether or not abnormal sound is included in the operation sound of the target apparatus P, the abnormal sound emphasis unit 23 performs equalizing process for emphasizing the intensity of sound pressure signals at frequencies related to the abnormal sound of the target apparatus P. Concretely, the abnormal sound emphasis unit 23 emphasizes the intensity of the sound pressure signals at the abnormal sound frequencies Fa which are determined in advance in the storage unit 21 out of sound pressure signals at the frequencies of 0 to 20000 Hz in the frequency characteristic Fs1 obtained by the signal transform unit 22. The abnormal sound emphasis unit 23 of the embodiment performs increase adjustment of increasing the sound pressure signals at the abnormal sound frequencies Fa out of the sound pressure signals in the frequency characteristic Fs1 only by a predetermined increase amount, and also performs decrease adjustment of decreasing the sound pressure signals at the normal frequencies Fn only by a predetermined decrease amount.

That is, the abnormal sound emphasis unit 23 increases the sound pressure signals at the abnormal sound frequencies Fa in the frequency characteristic Fs1 only by a predetermined increase amount which is the same as that of the sound pressure signals increased at the abnormal sound frequencies Fa in the abnormal sound template Fs2. The abnormal sound emphasis unit 23 also decreases the sound pressure signals at the normal frequencies Fn in the frequency characteristic Fs1 only by a predetermined decrease amount which is the same as that of the sound pressure signals decreased in the abnormal sound template Fs2. By the equalization performed by the abnormal sound emphasis unit 23 as described above, in the frequency characteristic Fs1 transformed by the signal transform unit 22, as illustrated in FIG. 6, the intensity of the sound pressure signals at the frequencies related to the abnormal sound of the target apparatus P is emphasized. The waveform of the sound pressure signals obtained by equalizing the frequency characteristic Fs1 transformed by the signal transform unit 22 can be made close to the waveform of the abnormal sound template Fs2.

Hereinafter, the signals obtained by emphasizing the intensity of the sound pressure signals at the frequencies related to the abnormal sound of the target apparatus P by the abnormal sound emphasis unit 23 will be also called an abnormal sound emphasized characteristic Fs3. The abnormal sound emphasized characteristic Fs3 corresponds to an abnormal sound emphasized signal.

The abnormal sound emphasis unit 23 outputs the information of the abnormal sound emphasized characteristic Fs3 to the sound analysis unit 24 and the signal inverse-transform unit 26.

The sound analysis unit 24 calculates an abnormal sound characteristic amount related to the intensity of the sound pressure signal in the abnormal sound emphasized characteristic Fs3 on the basis of the abnormal sound emphasized characteristic Fs3 input from the abnormal sound emphasis unit 23. In the embodiment, the sound analysis unit 24 obtains the abnormal sound characteristic amount as an emphasis vector Vp obtained by converting the intensity of a sound pressure signal at each frequency indicated by the abnormal sound emphasized characteristic Fs3 to a feature vector. The sound analysis unit 24 outputs the information of the calculated emphasis vector Vp to the abnormal sound determination unit 25.

The abnormal sound determination unit 25 determines whether or not abnormal sound is included in the operation sound of the target apparatus P on the basis of the information of the emphasis vector Vp input from the sound analysis unit 24 and the template vector Vt preliminarily stored in the storage unit 21. Concretely, the abnormal sound determination unit 25 obtains similarity between the abnormal sound emphasized characteristic Fs3 and the abnormal sound template Fs2 by comparing the emphasis vector Vp as the abnormal sound feature amount of the abnormal sound emphasized characteristic Fs3 and the template vector Vt as the feature amount of the abnormal sound template Fs2. The abnormal sound determination unit 25 determines whether or not abnormal sound is included in the operation sound of the target apparatus P on the basis of the information of the similarity between the abnormal sound emphasized characteristic Fs3 and the abnormal sound template Fs2. The details of the abnormal sound determination unit 25 will be explained in the description of the operation which will be given later.

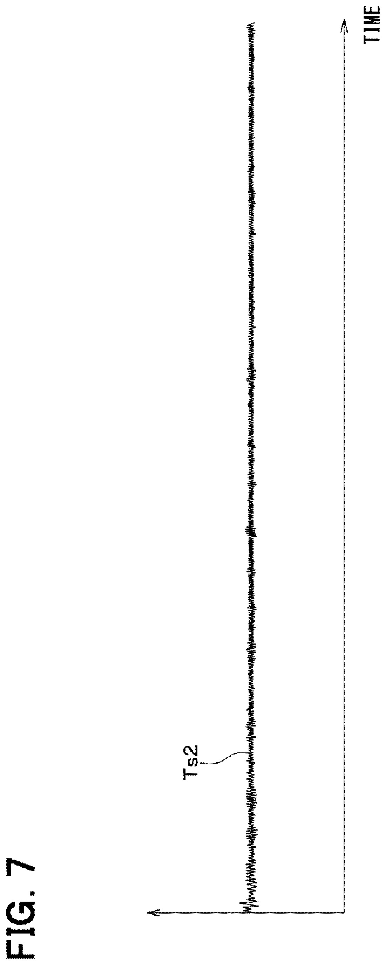

The signal inverse-transform unit 26 transforms the abnormal sound emphasized characteristic Fs3 input from the abnormal sound emphasis unit 23 to a signal indicating a time variation in the intensity of the sound pressure signal and outputs the resultant signal. Concretely, the signal inverse-transform unit 26 inversely transforms the abnormal sound emphasized characteristic Fs3 based on the frequency characteristic Fs1 obtained by Fourier transform by inverse short-time Fourier transform to an emphasized sound signal Ts2 as a time signal indicating a time variation in the intensity of the sound pressure signal. As illustrated in FIG. 7, the emphasized sound signal Ts2 includes information of intensity change of the sound pressure signal accompanying the time lapse. In the emphasized sound signal Ts2, the sound pressure signal of the frequency included in the abnormal sound is emphasized over the operation sound of the target apparatus P. The signal inverse-transform unit 26 outputs the emphasized sound signal Ts2 obtained by the transform to the sound output unit 30.

The sound output unit 30 is a signal output unit converting the emphasized sound signal Ts2 input from the signal inverse-transform unit 26 to, for example, an analog signal and outputting the analog signal. The sound output unit 30 outputs a signal corresponding to a sound pressure signal obtained by emphasizing the sound pressure signal at the frequency included in the abnormal sound over the operation sound of the target apparatus P to the speaker 50.

The speaker 50 is a sound generation unit outputting a sound obtained by emphasizing the abnormal sound over the operation sound of the target apparatus P on the basis of the signal input from the sound output unit 30. The speaker 50 is mounted, for example, around an operator who operates the abnormal sound detection device 1 and emits sound obtained by emphasizing the abnormal sound over the operation sound of the target apparatus P to the operator.

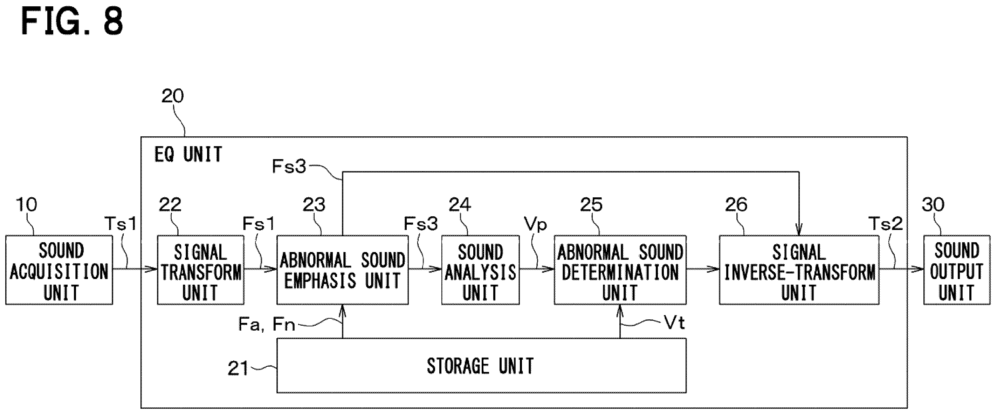

Hereinafter, the operation of the abnormal sound detection device 1 having the configuration as mentioned above will be described with reference to FIG. 8. When the sound acquisition unit 10 receives a signal according to operation sound of the target apparatus P from the microphone MC, the sound acquisition unit 10 outputs the obtained sound pressure time signal Ts1 to the signal transform unit 22.

The signal transform unit 22 receives the sound pressure time signal Ts1 from the sound acquisition unit 10 and transforms the sound pressure time signal Ts1 to the frequency characteristic Fs1 illustrated in FIG. 4 by short-time Fourier transform. The signal transform unit 22 outputs the transformed frequency characteristic Fs1 to the abnormal sound emphasis unit 23.

The abnormal sound emphasis unit 23 receives the frequency characteristic Fs1 transformed by the signal transform unit 22 and reads the information of the abnormal sound frequencies Fa and the normal frequencies Fn in the abnormal sound template Fs2 stored in the storage unit 21. The abnormal sound emphasis unit 23 obtains the abnormal sound emphasized characteristic Fs3 on the basis of the frequency characteristic Fs1, the abnormal sound frequencies Fa, and the normal frequencies Fn.

Concretely, the abnormal sound emphasis unit 23 performs increase adjustment of increasing the intensity of the sound pressure signals at the frequencies of 2350 Hz to 2450 Hz in the frequency characteristic Fs1 transformed by the signal transform unit 22 only by a predetermined increase amount. Further, the abnormal sound emphasis unit 23 performs decrease adjustment of decreasing the intensity of the sound pressure signals at frequencies lower than 2350 Hz and the sound pressure signals at frequencies higher than 2450 Hz only by a predetermined decrease amount. By the adjustment, the abnormal sound emphasis unit 23 obtains the abnormal sound emphasized characteristic Fs3 illustrated in FIG. 5 obtained by emphasizing the intensity of the sound pressure signals in the frequency band related to the abnormal sound of the target apparatus P over the frequency characteristic Fs1 transformed by the signal transform unit 22. The abnormal sound emphasis unit 23 outputs the information of the abnormal sound emphasized characteristic Fs3 to the sound analysis unit 24 and the signal inverse-transform unit 26.

When the information of the abnormal sound emphasized characteristic Fs3 is input from the abnormal sound emphasis unit 23, the sound analysis unit 24 obtains the emphasis vector Vp on the basis of the abnormal sound emphasized characteristic Fs3. The sound analysis unit 24 outputs the information of the calculated emphasis vector Vp to the abnormal sound determination unit 25.

When the information of the emphasis vector Vp is input from the sound analysis unit 24, the abnormal sound determination unit 25 reads the information of the template vector Vt stored in the storage unit 21. The abnormal sound determination unit 25 obtains similarity between the abnormal sound emphasized characteristic Fs3 and the abnormal sound template Fs2 by comparing the emphasis vector Vp and the template vector Vt. In the embodiment, the abnormal sound determination unit 25 calculates the similarity between the abnormal sound emphasized characteristic Fs3 and the abnormal sound template Fs2 as cosine similarity of the emphasis vector Vp to the template vector Vt. The abnormal sound determination unit 25 determines whether or not abnormal sound is included in the operation sound of the target apparatus P on the basis of whether or not the calculated cosine similarity is equal to or larger than a predetermined determination threshold.

The cosine similarity is a value between 0 and 1 and its value becomes larger as the similarity of the emphasis vector Vp to the template vector Vt becomes higher. In other words, the higher the similarity between the abnormal sound template Fs2 and the abnormal sound emphasized characteristic Fs3 is, the higher the cosine similarity is. The predetermined determination threshold is a reference value preliminarily determined by an experiment or the like to determine whether or not abnormal sound is included in the operation sound of the target apparatus P and is set to, for example, 0.2.

In the case where the value of the cosine similarity is 0.2 or larger, the abnormal sound determination unit 25 determines that abnormal sound is included in the operation sound of the target apparatus P. On the contrary, when it is not determined that the value of the cosine similarity is 0.2 or larger, the abnormal sound determination unit 25 determines that no abnormal sound is included in the operation sound of the target apparatus P. The abnormal sound determination unit 25 outputs the result of the determination of whether or not abnormal sound is included in the operation sound of the target apparatus P to the signal inverse-transform unit 26.

The predetermined determination threshold may be a value smaller or larger than 0.2 as long as it is a value by which whether or not abnormal sound is included in the operation sound of the target apparatus P can be determined.

The cosine similarity of the emphasis vector Vp calculated on the basis of the abnormal sound emphasized characteristic Fs3 illustrated in FIG. 6 to the template vector Vt calculated on the basis of the abnormal sound template Fs2 illustrated in FIG. 5 is about 0.229. That is, the similarity between the abnormal sound template Fs2 and the abnormal sound emphasized characteristic Fs3 is about 0.229.

On the other hand, the cosine similarity of the vector amount calculated in a manner similar to the emphasis vector Vp as the feature amount of the frequency characteristic Fs1 illustrated in FIG. 4 to the template vector Vt calculated on the basis of the abnormal sound template Fs2 illustrated in FIG. 5 is about 0.147. That is, the similarity between the abnormal sound template Fs2 and the frequency characteristic Fs1 is about 0.147.

As described above, in the case of analyzing the sound pressure signal when abnormal sound is included in the operation sound of the target apparatus P, the similarity to each sound pressure signal largely varies between the case of emphasizing the sound pressure signal at the frequency related to the abnormal sound and the case where the intensity is not emphasized. When the intensity of the sound pressure signal at the frequency related to abnormal sound is emphasized, the similarity can be increased as compared with the case where the intensity of the sound pressure signal at the frequency related to abnormal sound is not emphasized. It facilitates execution of determination of whether or not abnormal sound is included in the operation sound of the target apparatus P by using a predetermined determination threshold.

When the determination result that abnormal sound is included in the operation sound of the target apparatus P is received from the abnormal sound determination unit 25, the signal inverse-transform unit 26 transforms the abnormal sound emphasized characteristic Fs3 input from the abnormal sound emphasis unit 23 to the emphasized sound signal Ts2 illustrated in FIG. 7 by the inverse short-time Fourier transform. The signal inverse-transform unit 26 outputs the emphasized sound signal Ts2 obtained by the transform to the sound output unit 30. The sound output unit 30 outputs a signal according to the emphasized sound signal Ts2 input from the signal inverse-transform unit 26 to the speaker 50. The speaker 50 emits sound in which the abnormal sound is emphasized over the operation sound of the target apparatus P.

When the determination result that abnormal sound is not included in the operation sound of the target apparatus P is received from the abnormal sound determination unit 25, the signal inverse-transform unit 26 does not output the emphasized sound signal Ts2 to the sound output unit 30 without performing the inverse short-time Fourier transform on the abnormal sound emphasized characteristic Fs3 input from the abnormal sound emphasis unit 23. Consequently, the sound in which the abnormal sound is emphasized over the operation sound of the target apparatus P is not emitted from the speaker 50.

As described above, the abnormal sound detection device 1 obtains the abnormal sound emphasized characteristic Fs3 derived by emphasizing the intensity of the sound pressure signal at the frequency related to the abnormal sound of the target apparatus P over the operation sound of the target apparatus P and, on the basis of the abnormal sound emphasized characteristic Fs3, determines whether or not abnormal sound is included in the operation sound of the target apparatus P.

As described above, by determining whether or not abnormal sound is included in operation sound of a target apparatus P on the basis of an abnormal sound emphasized characteristic Fs3 obtained by emphasizing intensity of a sound pressure signal at a frequency related to abnormal sound of the target apparatus P, even when the abnormal sound included in the operation sound of the target apparatus P is slight, the abnormal sound can be easily detected.

By the above-described embodiment, the following effects can be obtained.
(1) In the foregoing embodiment, the abnormal sound emphasis unit 23 performs the increase adjustment of increasing the sound pressure signal at the abnormal sound frequency Fa in the sound pressure signals at the frequencies in the frequency characteristic Fs1, and also performs the decrease adjustment of decreasing the sound pressure signal at the normal frequency Fn.
   By the operation, the intensity of the sound pressure signal at the frequency related to the abnormal sound can be easily emphasized over the operation sound of the target apparatus P. As compared with the case of performing either the increase adjustment or the decrease adjustment on the sound pressure signals in the frequency characteristic Fs1, the intensity of the sound voltage signal at the frequency related to the abnormal sound can be more emphasized over the operation sound of the target apparatus P.
(2) In the foregoing embodiment, in the storage unit 21, the abnormal sound template Fs2 as information related to abnormal sound included in operation sound of the target apparatus P is determined in advance.
   Consequently, by comparing the abnormal sound emphasized characteristic Fs3 with the abnormal sound template Fs2 as information related to abnormal sound included in operation sound of the target apparatus P, determination of whether or not abnormal sound is included in the operation sound of the target apparatus P is facilitated.
(3) In the foregoing embodiment, the abnormal sound template Fs2 is set on the basis of the operation sound of the target apparatus P operating in the abnormal state.
   By the setting, whether or not abnormal sound is included in the operation sound of the target apparatus P can be determined on the basis of the abnormal sound template Fs2 which is set based on the operation sound of the target apparatus P actually operating in the abnormal state, so that the precision of the determination can be improved.
(4) In the foregoing embodiment, the sound analysis unit 24 calculates the emphasis vector Vp as an abnormal sound feature amount related to intensity of a sound pressure signal in the abnormal sound emphasized characteristic Fs3. The storage unit 21 stores the template vector Vt as a feature amount related to the intensity of a sound pressure signal in the abnormal sound template Fs2. The abnormal sound determination unit 25 determines whether or not abnormal sound is included in the operation sound of the target apparatus P on the basis of the emphasized vector Vp obtained by the sound analysis unit 24 and the template vector Vt stored in the storage unit 21.
   In such a manner, whether or not abnormal sound is included in the operation amount of the target apparatus P can be determined on the basis of the feature amounts of the abnormal sound emphasized characteristic Fs3 and the abnormal sound template Fs2. Consequently, the determination is facilitated.
(5) In the foregoing embodiment, the abnormal sound detection device 1 has the signal inverse-transform unit 26 transforming the abnormal sound emphasized characteristic Fs3 obtained by the abnormal sound emphasis unit 23 to the emphasized sound signal Ts2 indicating time variation of the intensity of the sound pressure signal and outputting the emphasized sound signal Ts2. The abnormal sound detection device 1 has the speaker 50 generating sound obtained by emphasizing abnormal sound over operation sound of the target apparatus P on the basis of the emphasized sound signal Ts2.

With the configuration, sound obtained by emphasizing abnormal sound over operation sound of the target apparatus P can be emitted to, for example, an operator operating the abnormal sound detection device 1.

### (First modification to the first embodiment)

In the foregoing first embodiment, the example of performing the increase adjustment and the decrease adjustment when the abnormal sound emphasis unit 23 emphasizes the intensity of a sound pressure signal in a frequency band related to abnormal sound of the target apparatus P in the frequency characteristic Fs1 has been described. However, the present disclosure is not limited to the example. For example, by performing only one of the increase adjustment and the decrease adjustment, the abnormal sound emphasis unit 23 may emphasize the intensity of a sound pressure signal in a frequency band related to abnormal sound of the target apparatus P in the frequency characteristic Fs1.

### (Second modification to the first embodiment)

In the foregoing first embodiment, the example that when the abnormal sound determination unit 25 determines that abnormal sound is included in the operation sound of the target apparatus P, the abnormal sound detection device 1 emits sound obtained by emphasizing the abnormal sound over the operation sound of the target apparatus P from the speaker 50 has been described. However, the present disclosure is not limited to the example. For example, the abnormal sound detection device 1 may have a configuration of emitting operation sound of the target apparatus P from the speaker 50 regardless of the process of determining whether or not abnormal sound is included in the operation sound of the target apparatus P performed by the abnormal sound determination unit 25.

### (Second embodiment)

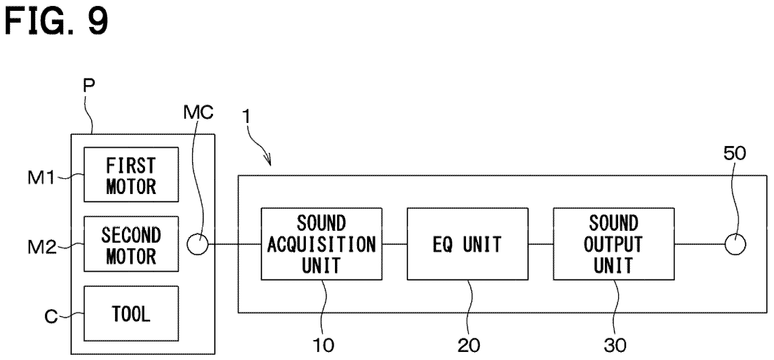

Second Embodiment will be described with reference to FIGS. 9 to 15. The second embodiment is different from the first embodiment with respect to information related to abnormal sound included in operation sound of the target apparatus P, which is stored in advance in the storage unit 21. The second embodiment is different from the first embodiment also with respect to processes performed by the abnormal sound emphasis unit 23, the sound analysis unit 24, and the abnormal sound determination unit 25. In the second embodiment, parts different from the first embodiment will be mainly described, and description of parts similar to the first embodiment may be omitted.

The target apparatus P of the second embodiment is, for example, a cutting machine performing cutting process on a not-illustrated object to be cut. As illustrated in FIG. 9, the target apparatus P has, as a component device for performing cutting process, a tool T for cutting an object to be cut. As component devices for performing cutting process, the target apparatus P also has a first motor M1 for operating the tool T and a second motor M2 for moving an object to be cut. As described above, the target apparatus P has a plurality of component devices.

At the time of performing the cutting process, the target apparatus P of the embodiment simultaneously generates a first motor sound as operation sound of the first motor M1, a second motor sound as operation sound of the second motor M2, and a cutting sound generated when the tool T cuts an object to be cut. The abnormal sound detection device 1 determines whether or not abnormal sound is included in operation sound including the first motor sound, the second motor sound, and the cutting sound simultaneously generated when the cutting machine as the target apparatus P performs the cutting process. Hereinafter, the operation sound including the first motor sound, the second motor sound, and the cutting sound generated when the target apparatus P operates will be also simply called the operation sound of the target apparatus P.

In the storage unit 21 of the embodiment, as information related to abnormal sound included in the operation sound of the target apparatus P, information related to the operation sounds of the first motor M1 and the second motor M2 and information related to the cutting sound of the tool T is stored. In the storage unit 21, information of frequencies included in the first motor sound when the first motor M1 operates in the normal state and information of frequencies included in the second motor sound when the second motor M2 operates in the normal state is independently stored in advance. In the storage unit 21, information of frequencies included in the cutting sound when the target apparatus P performs the cutting process normally is stored in advance independently of the information of the frequencies included in each of the first motor sound in the normal state and the second motor sound in the normal state. In other words, the storage unit 21 stores, for each of the component devices, the information of frequencies included in the operation sound when each of the first motor M1, the second motor M2, and the tool T operates normally.

Concretely, in the storage unit 21, information of a frequency of a sound pressure signal relatively high as compared with other frequencies is stored for each of the operation sounds; the normal sound of the first motor M1, the normal sound of the second motor M2, and the normal cutting sound of the tool T. In the storage unit 21 of the embodiment, the magnitude of a sound pressure signal at each of the frequencies 0 to 20000 Hz is indicated for each of the component devices, and information of whether or not the sound pressure signal is relatively high as compared with the other frequency bands is stored on a band unit basis when the frequencies 0 to 20000 Hz are divided into a plurality of frequency bands.

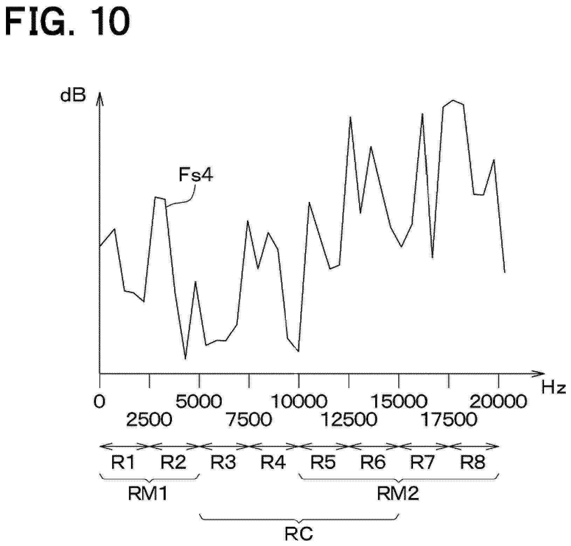

More concretely, the storage unit 21 stores, for each of the component devices, information of a band in which a sound pressure signal is relatively large as compared with the other bands when the frequency band of 0 to 20000 Hz is divided into a first frequency band R1 to an eighth frequency band R8 each having an equal band width of 2500 Hz. The information of the sound pressure signal for each of the first to eighth frequency bands R1 to R8 of each of the component devices is used for obtaining a cutting abnormal template Fs4 illustrated in FIG. 10 which will be described later and at the time of executing a control process to be described later by the abnormal sound emphasis unit 23.

In the embodiment, with respect to the normal sound of the first motor M1, the sound pressure signals in the first and second frequency bands R1 and R2 are relatively large as compared with the sound pressure signals in the other frequency bands among the first to eighth frequency bands R1 to R8. With respect to the normal sound of the second motor M2, the sound pressure signals in the fifth, sixth, seventh, and eighth frequency bands R5, R6, R7, and R8 among the first to eighth frequency bands R1 to R8 are relatively large as compared with the sound pressure signals in the other bands. With respect to the normal cutting sound of the tool T, the sound pressure signals in the third, fourth, fifth, and sixth frequency bands R3, R4, R5, and R6 among the first to eighth frequency bands R1 to R8 are relatively large as compared with the sound pressure signals in the other bands.

Hereinafter, in the first to eighth frequency bands R1 to R8, the band in which the sound pressure signal is relatively large at the frequencies included in the normal sound of the first motor M1 will be also called a first motor band RM1. In the first to eighth frequency bands R1 to R8, the band in which the sound pressure signal is relatively large at the frequencies included in the normal sound of the second motor M2 will be also called a second motor band RM2. In the first to eighth frequency bands R1 to R8, the band in which the sound pressure signal is relatively large at the frequencies included in the normal cutting sound of the tool T will be also called a cutting band RC. In the storage unit 21, the information of the first motor band RM1, the second motor band RM2, and the cutting band RC is stored in advance.

In the case where abnormal sound included in the operation sound of the target apparatus P is caused by a component device, the abnormal sound of the component device is generated when the component device operates in the abnormal state. The possibility that abnormal sound generated when a component device operates in the abnormal state includes frequencies included in operation sound generated when the component device operates in the normal state is high. Consequently, the frequency at which the sound pressure signal is relatively high in the operation sound in the case where each of the first motor M1, the second motor M2, and the tool T as component devices of the target apparatus P is in the normal state is a frequency estimated to be included in abnormal sound at the time when the target apparatus P enters the abnormal state from the normal state. Therefore, the first motor band RM1, the second motor band RM2, and the cutting band RC are information of frequencies related to abnormal sound included in the operation sound of the target apparatus P of the embodiment.

The first motor band RM1 is obtained from, for instance, a result of an experiment of collecting actual first motor sound when the first motor M1 in the normal state is operated independently and performing sound analysis. The second motor band RM2 is obtained from, for instance, a result of an experiment of collecting actual second motor sound when the second motor M2 in the normal state is operated independently and performing sound analysis. The cutting band RC is obtained from, for example, a result of an experiment of collecting actual cutting sound in the case where the cutting process is performed normally by the tool T and performing sound analysis.

In the storage unit 21 of the embodiment, the cutting abnormal template Fs4 illustrated in FIG. 10 related to operation sound including all of abnormal sound of the first motor sound, abnormal sound of the second motor sound, and abnormal sound of the cutting sound is stored.

In the cutting abnormal template Fs4, the sound pressure signals of the operation sound of the target apparatus P actually including the abnormal sound of each of the first motor sound, the second motor sound, and the cutting sound are transformed to sound pressure signals at respective frequencies, and sound pressure signals in the first motor band RM1, the second motor band RM2, and the cutting band RC are emphasized. Concretely, the cutting abnormal template Fs4 illustrated in FIG. 10 is derived by increasing the sound pressure signals in the first motor band RM1, the second motor band RM2, and the cutting band RC only by a predetermined increase amount in a manner similar to the time of obtaining the abnormal sound template Fs2 in the first embodiment.

In the second embodiment, by covering the first motor band RM1, the second motor band RM2, and the cutting band RC, all of the first to eighth frequency bands R1 to R8 are included. Consequently, in the cutting abnormal template Fs4 illustrated in FIG. 10, the sound pressure signals at all of the frequencies 0 to 20000 Hz are increased only by a predetermined increase amount.

Even if all of the first to eighth frequency bands R1 to R8 cannot be covered by any of the first motor band RM1, the second motor band RM2, and the cutting band RC, it is unnecessary to increase a sound pressure signal in a band which cannot be covered.

Further, in the storage unit 21, as a feature amount related to the intensity of a sound pressure signal in the cutting abnormal template Fs4, a cutting template vector Vtc obtained by converting the intensity of the sound pressure signal at each of the frequencies indicated by the cutting abnormal template Fs4 to a feature vector is stored in advance. The cutting abnormal template Fs4 is information related to abnormal sound included in operation sound of the target apparatus P and corresponds to abnormal sound information. The cutting template vector Vtc corresponds to an estimated feature amount.

The cutting abnormal template Fs4 and the cutting template vector Vtc are obtained from, for instance, a result of an experiment of collecting actual operation sound in the case where the first and second motors M1 and M2 are in an abnormal state and cutting process is not performed normally by the tool T and performing sound analysis. The cutting abnormal template Fs4 is based on the first motor sound, the second motor sound, and the cutting sound as operation sounds generated when the first motor M1, the second motor M2, and the tool T as component devices of the target apparatus P operate in an abnormal state, respectively.

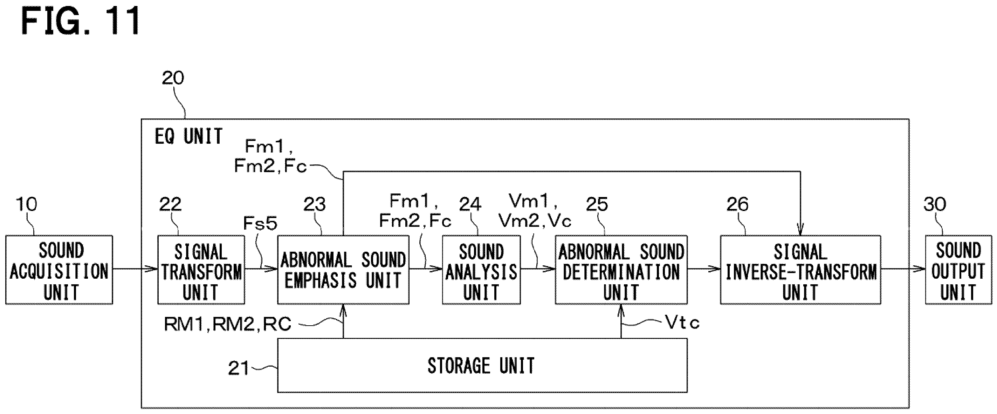

Hereinafter, the operation of the abnormal sound detection device 1 of the embodiment having the above-described configuration will be described with reference to FIG. 11. In the description of the operation of the embodiment with reference to FIG. 11, the description of the control process which is the same as that in the operation of the first embodiment described with reference to FIG. 8 may not be repeated.

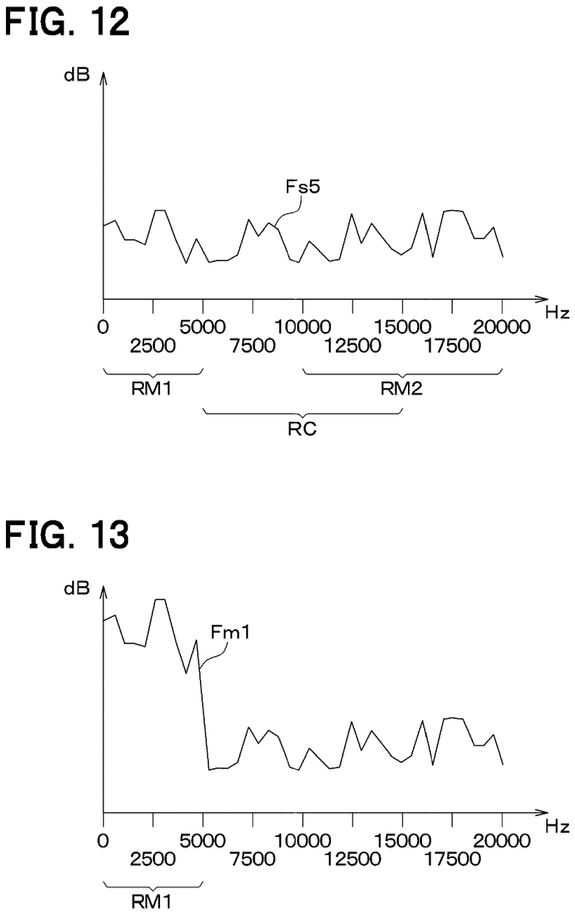

When a time signal indicating a time variation in the intensity of a sound pressure signal is received from the sound acquisition unit 10, the signal transform unit 22 performs short-time Fourier transform on the signal to transform the signal to a frequency characteristic Fs5 illustrated in FIG. 12. The signal transform unit 22 outputs the frequency characteristic Fs5 obtained by the transform to the abnormal sound emphasis unit 23.

When the frequency characteristic Fs5 transformed by the signal transform unit 22 is received, the abnormal sound emphasis unit 23 reads information of each of the first motor band RM1, the second motor band RM2, and the cutting band RC stored in the storage unit 21. Based on the frequency characteristic Fs5, the first motor band RM1, the second motor band RM2, and the cutting band RC, the abnormal sound emphasis unit 23 emphasizes the intensity of sound pressure signals at frequencies related to abnormal sound in the frequencies in the frequency characteristic Fs5.

Concretely, the abnormal sound emphasis unit 23 performs increase adjustment of increasing the intensity of sound pressure signals in each of the first motor band RM1, the second motor band RM2, and the cutting band RC only by a predetermined increase amount for the frequency characteristic Fs5 transformed by the signal transform unit 22.

Specifically, the abnormal sound emphasis unit 23 obtains a first motor emphasized characteristic Fm1 illustrated in FIG. 13 in which abnormal sound of the first motor M1 is emphasized by increasing the intensity of the sound pressure signals in the first motor band RM1 relative to the frequency characteristic Fs5. The first motor emphasized characteristic Fm1 is obtained by increasing the intensity of the sound pressure signals in the first motor band RM1 relative to the frequency characteristic Fs5 illustrated in FIG. 12.

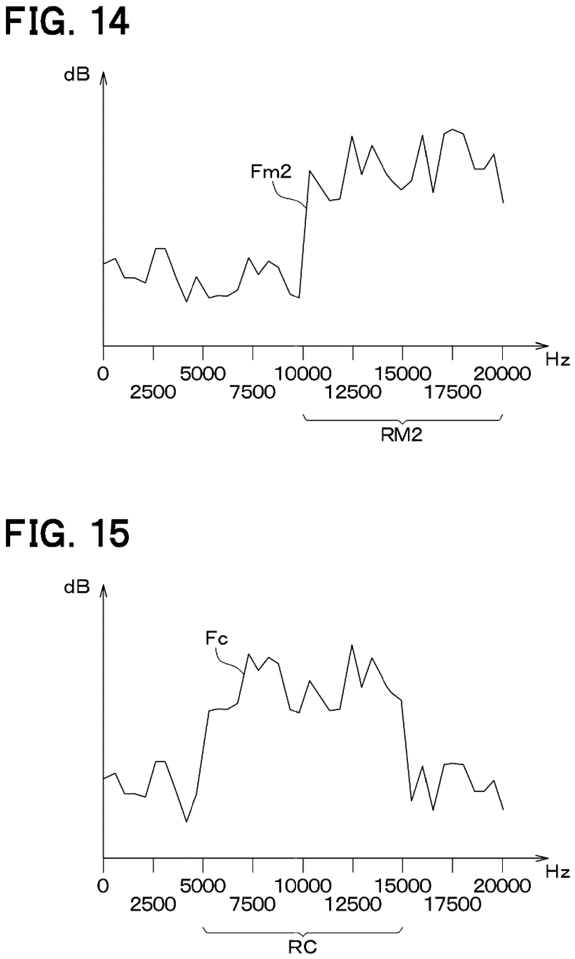

The abnormal sound emphasis unit 23 obtains a second motor emphasized characteristic Fm2 illustrated in FIG. 14 in which abnormal sound of the second motor M2 is emphasized by increasing the intensity of the sound pressure signals in the second motor band RM2 relative to the frequency characteristic Fs5. The second motor emphasized characteristic Fm2 is obtained by increasing the intensity of the sound pressure signals in the second motor band RM2 relative to the frequency characteristic Fs5 illustrated in FIG. 12.

The abnormal sound emphasis unit 23 increases the intensity of the sound pressure signals in the cutting band RC relative to the frequency characteristic Fs5 to obtain a cutting emphasized characteristic Fc illustrated in FIG. 15 in which abnormal sound in the cutting sound of the tool T is emphasized. The cutting emphasized characteristic Fc is obtained by increasing the intensity of the sound pressure signals in the cutting band RC relative to the frequency characteristic Fs5 illustrated in FIG. 12.

The abnormal sound emphasis unit 23 outputs the information of each of the first motor emphasized characteristic Fm1, the second motor emphasized characteristic Fm2, and the cutting emphasized characteristic Fc to the sound analysis unit 24 and the signal inverse-transform unit 26. The first motor emphasized characteristic Fm1, the second motor emphasized characteristic Fm2, the cutting emphasized characteristic Fc correspond to abnormal sound emphasized signals.

When the information of the first motor emphasized characteristic Fm1, the second motor emphasized characteristic Fm2, and the cutting emphasized characteristic Fc is input from the abnormal sound emphasis unit 23, the sound analysis unit 24 obtains an abnormal sound feature amount of each of the first motor emphasized characteristic Fm1, the second motor emphasized characteristic Fm2, and the cutting emphasized characteristic Fc.

Concretely, the sound analysis unit 24 obtains an abnormal sound feature amount related to the intensity of the sound pressure signals in the first motor emphasized characteristic Fm1 as a first motor vector Vm1 obtained by transforming the intensity of the sound pressure signal at each frequency indicated by the first motor emphasized characteristic Fm1 to a feature vector. The sound analysis unit 24 obtains an abnormal sound feature amount related to the intensity of the sound pressure signals in the second motor emphasized characteristic Fm2 as a second motor vector Vm2 obtained by transforming the intensity of the sound pressure signal at each frequency indicated by the second motor emphasized characteristic Fm2 to a feature vector. Further, the sound analysis unit 24 obtains an abnormal sound feature amount related to the intensity of the sound pressure signals in the cutting emphasized characteristic Fc as a cutting vector Vc obtained by transforming the intensity of the sound pressure signal at each frequency indicated by the cutting emphasized characteristic Fc to a feature vector.

The sound analysis unit 24 outputs the information of each of the first motor vector Vm1, the second motor vector Vm2, and the cutting vector Vc calculated to the abnormal sound determination unit 25.

When the information of each of the first motor vector Vm1, the second motor vector Vm2, and the cutting vector Vc is input from the sound analysis unit 24, the abnormal sound determination unit 25 reads the information of the cutting template vector Vtc stored in the storage unit 21. The abnormal sound determination unit 25 compares each of the first motor vector Vm1, the second motor vector Vm2, and the cutting vector Vc with the template vector Vt. By the operation, the similarity between each of the first motor emphasized characteristic Fm1, the second motor emphasized characteristic Fm2, and the cutting emphasized characteristic Fc and the cutting abnormal template Fs4 is obtained by the abnormal sound determination unit 25.

Concretely, the abnormal sound determination unit 25 calculates the similarity between the first motor emphasized characteristic Fm1 and the cutting abnormal template Fs4 as cosine similarity between the first motor vector Vm1 and the cutting template vector Vtc. The abnormal sound determination unit 25 calculates the similarity between the second motor emphasized characteristic Fm2 and the cutting abnormal template Fs4 as cosine similarity between the second motor vector Vm2 and the cutting template vector Vtc. The abnormal sound determination unit 25 calculates the similarity between the cutting emphasized characteristic Fc and the cutting abnormal template Fs4 as cosine similarity between the cutting vector Vc and the cutting template vector Vtc.

The abnormal sound determination unit 25 determines whether or not the value of at least one of the cosine similarities respectively corresponding to the first motor vector Vm1, the second motor vector Vm2, and the cutting vector Vc calculated is 0.2 or larger.

In the case where the value of at least one of the cosine similarities respectively corresponding to the first motor vector Vm1, the second motor vector Vm2, and the cutting vector Vc is equal to or larger than 0.2, the abnormal sound determination unit 25 determines that abnormal sound is included in the operation sound of the target apparatus P. The abnormal sound determination unit 25 determines that the component device corresponding to a vector amount that the value of each of the cosine similarities respectively corresponding to the first motor vector Vm1, the second motor vector Vm2, and the cutting vector Vc calculated is equal to or larger than 0.2 is the cause of abnormal sound generation.

On the other hand, in the case where it is not determined that all of the cosine similarities respectively corresponding to the first motor vector Vm1, the second motor vector Vm2, and the cutting vector Vc calculated are not equal to or larger than 0.2, the abnormal sound determination unit 25 determines that abnormal sound is not included in the operation sound of the target apparatus P.

For example, the cosine similarity of the first motor vector Vm1 calculated based on the first motor emphasized characteristic Fm1 illustrated in FIG. 13 to the cutting plate vector Vtc calculated based on the cutting abnormal template Fs4 illustrated in FIG. 10 is about 0.10. The cosine similarity of the second motor vector Vm2 calculated based on the second motor emphasized characteristic Fm2 illustrated in FIG. 14 to the cutting plate vector Vtc calculated based on the cutting abnormal template Fs4 illustrated in FIG. 10 is about 0.25. The cosine similarity of the cutting vector Vc calculated based on the cutting emphasized characteristic Fc illustrated in FIG. 15 to the cutting plate vector Vtc calculated based on the cutting abnormal template Fs4 illustrated in FIG. 10 is about 0.15.

In this case, the abnormal sound determination unit 25 determines that abnormal sound is included in the operation sound of the target apparatus P. Further, the abnormal sound determination unit 25 determines that the cause of the abnormal sound generation is the second motor M2 among the first motor M1, the second motor M2, and the tool T as component devices of the target apparatus P. When it is determined that abnormal sound is included in the operation sound of the target apparatus P, the abnormal sound determination unit 25 outputs information of the component device as the cause of the abnormal sound generation to the signal inverse-transform unit 26.

When the information of the component device as the cause of the abnormal sound generation is received from the abnormal sound determination unit 25, the signal inverse-transform unit 26 performs inverse short-time Fourier-transform on the characteristic corresponding to the component device determined as the cause of the abnormal sound generation among the first motor emphasized characteristic Fm1, the second motor emphasized characteristic Fm2, and the cutting emphasized characteristic Fc. By the operation, the characteristic corresponding to the component device determined as the cause of the abnormal sound generation is transformed to a time signal indicating a time variation in the intensity of the sound pressure signal. The signal inverse-transform unit 26 outputs the time signal obtained by the transform to the sound output unit 30. The sound output unit 30 outputs a signal according to the time signal input from the signal inverse-transform unit 26 to the speaker 50. The speaker 50 emits operation sound of the target apparatus P obtained by emphasizing the operation sound of the component device determined as the cause of the abnormal sound generation among the component devices of the target apparatus P.

As described above, in the target apparatus P having the first motor M1, the second motor M2, and the tool T, the cutting abnormal template Fs4 is set on the basis of the respective operation sounds of the first motor M1, the second motor M2, and the tool T. The abnormal sound emphasis unit 23 emphasizes the intensity of each of sound pressure signals of the first motor band RM1, the second motor band RM2, and the cutting band RC stored in the storage unit 21, in the sound pressure signals in the frequency characteristic Fs5 transformed by the signal transform unit 22. Consequently, for the respective component devices, the first motor emphasized characteristic Fm1, the second motor emphasized characteristic Fm2, and the cutting emphasized characteristic Fc are obtained by the abnormal sound emphasis unit 23.

The abnormal sound determination unit 25 can therefore compare the first motor emphasized characteristic Fm1, the second motor emphasized characteristic Fm2, and the cutting emphasized characteristic Fc with the cutting abnormal template Fs4 in which the sound pressure signals in the first motor band RM1, the second motor band RM2, and the cutting band RC are emphasized. As a result, in the case where abnormal sound is included in the operation sound of the target apparatus P, the component device as the cause of the abnormal sound generation can be estimated from the first motor M1, the second motor M2, and the tool T as the component devices.

### (First modification to the second embodiment)

In the foregoing second embodiment, the example of emitting sound obtained by emphasizing the operation sound of the component device as the cause of the abnormal sound generation by the speaker 50 when the abnormal sound determination unit 25 determines that abnormal sound is not included in the operation sound of the target apparatus P has been described. However, the present disclosure is not limited to the example. For example, the abnormal sound detection device 1 may have a configuration that, by performing the inverse short-time Fourier transform on all of the first motor emphasized characteristic Fm1, the second motor emphasized characteristic Fm2, and the cutting emphasized characteristic Fc, operation sound in which the operation sounds of all of the first motor M1, the second motor M2, and the tool T are respectively emphasized is emitted.

### (Second modification to the second embodiment)

In the foregoing second embodiment, the example that the first motor band RM1, the second motor band RM2, and the cutting band RC are based on the operation sounds in the case where the first motor M1, the second motor M2, and the tool T as the component devices of the target apparatus P are in the normal state, respectively, has been described. However, the present disclosure is not limited to the example. The first motor band RM1, the second motor band RM2, and the cutting band RC may be based on the operation sounds in the case where the first motor M1, the second motor M2, and the tool T are in the abnormal state, respectively.

### (Invention)

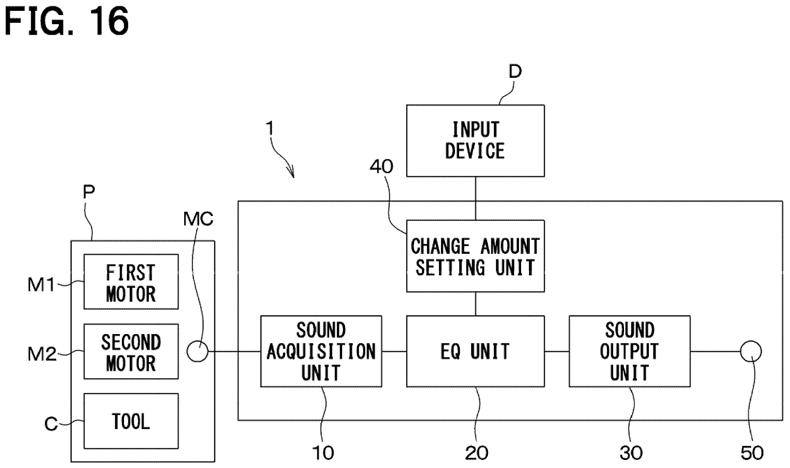

The invention will be described with reference to FIGS. 16 to 22. In the third embodiment, information related to the operation sound of the target apparatus P which is stored in advance by the storage unit 21 is different from that of the first and second embodiments. The invention is different from the first and second embodiments with respect to a part of the configuration of the EQ unit 20 and, in addition, the processes performed by the abnormal sound emphasis unit 23, the sound analysis unit 24, and the abnormal sound determination unit 25. In the following, parts different from the first and second embodiments will be mainly described, and parts similar to the first and second embodiments may not be described.

The target apparatus P of the invention is a cutting machine in a manner similar to the second embodiment. In a manner similar to the second embodiment, the abnormal sound detection device 1 of the third embodiment determines whether or not abnormal sound is included in operation sounds including a first motor sound, a second motor sound, and a cutting sound generated when the cutting machine as the target apparatus P performs cutting process.

Different from the first and second embodiments, however, the storage unit 21 of the invention does not store information related to abnormal sound included in the operation sound of the target apparatus P detected prior to execution of abnormal sound detection. Concretely, in the storage unit 21, information of the first motor band RM1, the second motor band RM2, the cutting band RC, the cutting abnormal template Fs4, and the cutting template vector Vtc is not stored. In other words, in the storage unit 21, information related to the operation sound of the target apparatus P including normal sounds and abnormal sounds of the first motor M1, the second motor M2, and the tool T as the component devices is not stored.

On the other hand, as will be described later, the storage unit 21 of the invention is configured so that an abnormal sound feature amount of each of the first motor emphasized characteristic Fm1, the second motor emphasized characteristic Fm2, and the cutting emphasized characteristic Fc obtained by the abnormal sound emphasis unit 23 can be stored. The storage unit 21 is configured to store setting information which is set in a change amount setting unit 40 to be described later.

As illustrated in FIG. 16, the abnormal sound detection device 1 of the invention is obtained by adding the change amount setting unit 40 to that of the first and second embodiments. The change amount setting unit 40 is connected to an input device D provided on the outside of the abnormal sound detection device 1.

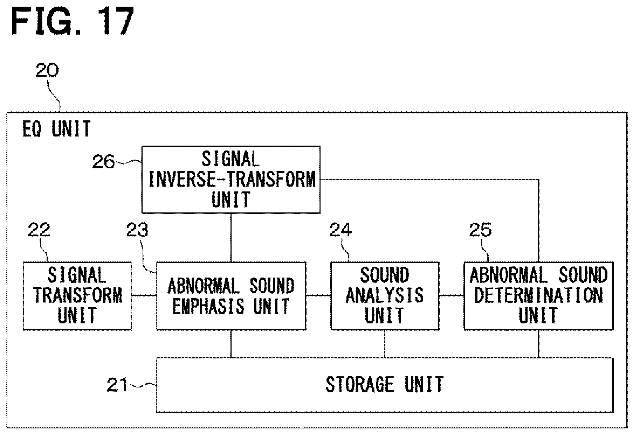

As illustrated in FIG. 17, the sound analysis unit 24 of the third embodiment is connected to the storage unit 21 and is configured to output an abnormal sound feature amount of each of the first motor emphasized characteristic Fm1, the second motor emphasized characteristic Fm2, and the cutting emphasized characteristic Fc calculated by the sound analysis unit 24 to the storage unit 21.

The abnormal sound determination unit 25 of the embodiment is connected to the storage unit 21 and is configured so as to be able to read, from the storage unit 21, the abnormal sound feature amount of each of the first motor emphasized characteristic Fm1, the second motor emphasized characteristic Fm2, and the cutting emphasized characteristic Fc output to the storage unit 21 from the sound analysis unit 24 in the past.

The change amount setting unit 40 is a device executing a process according to a program recorded in the ROM in the storage unit 21 or a writable nonvolatile storage medium. The change amount setting unit 40 sets a change amount of a sound pressure signal when the abnormal sound emphasis unit 23 emphasizes the intensity of a sound pressure signal at a frequency included in the operation sound of a component device of the target apparatus P. Concretely, the change amount setting unit 40 is configured so that it can preliminarily set an increase amount at the time of increasing the intensity of a sound pressure signal at a frequency included in the operation sound of a component device and can set a decrease amount at the time of decreasing the intensity of a sound pressure signal at a frequency different from frequencies included in the operation sound of the component device.

The change amount setting unit 40 is configured so that it can set the increase amount and the decrease amount at each of frequencies of the first motor emphasized characteristic Fm1, the second motor emphasized characteristic Fm2, and the cutting emphasized characteristic Fc obtained by the abnormal sound emphasis unit 23.

Concretely, the increase amount and the decrease amount of a sound pressure signal set by the change amount setting unit 40 can be set within a predetermined increase/decrease range using the predetermined increase amount or the predetermined decrease amount described in the first embodiment as a reference. The predetermined increase/decrease range is set in advance. For example, the predetermined increase/decrease range of the embodiment is set to a range from -3 dB to + 3 dB. The predetermined increase/decrease range is not limited to the range of -3 dB to +3 dB. The minimum value may be set to a value smaller than -3 dB or a value larger than -3 dB. The maximum value of the predetermined increase/decrease range may be set to a value smaller than +3 dB or a value larger than +3 dB.

In one further embodiment, the increase amount and the decrease amount of a sound pressure signal set by the change amount setting unit 40 can be set for each of predetermined frequency bands for each of the first motor emphasized characteristic Fm1, the second motor emphasized characteristic Fm2, and the cutting emphasized characteristic Fc. Concretely, the increase amount and the decrease amount of a sound pressure signal set by the change amount setting unit 40 can be set for each of the first to eighth frequency bands R1 to R8 for each of the first motor emphasized characteristic Fm1, the second motor emphasized characteristic Fm2, and the cutting emphasized characteristic Fc.

More concretely, the change amount setting unit 40 can set an increase amount at the time of increasing a sound pressure signal in the first motor band RM1 and a decrease amount at the time of decreasing a sound pressure signal in a frequency band different from the first motor band RM1 by the abnormal sound emphasis unit 23.

The change amount setting unit 40 can also set an increase amount at the time of increasing a sound pressure signal in the second motor band RM2 and a decrease amount at the time of decreasing a sound pressure signal in a frequency band different from the second motor band RM2 by the abnormal sound emphasis unit 23.

The change amount setting unit 40 can set an increase amount at the time of increasing a sound pressure signal in the cutting band RC and a decrease amount at the time of decreasing a sound pressure signal in a frequency band different from the cutting band RC by the abnormal sound emphasis unit 23. The input side of the change amount setting unit 40 is connected to the input device D. By signals input from the input device D, the increase amount and the decrease amount are controlled. The storage unit 21 of the EQ unit 20 is connected to the output side of the change amount setting unit 40, and the change amount setting unit 40 outputs setting information which is set by a signal input from the input device D to the storage unit 21.

The input device D is an input unit for performing an operation to set an increase amount and a decrease amount of a sound pressure signal which is set by the change amount setting unit 40. The input device D may be attached to the abnormal sound detection device 1 or provided in a position apart from the abnormal sound detection device 1. Alternatively, the input device D may be a terminal carried by an operator operating the abnormal sound detection device 1. In this case, the input device D and the change amount setting unit 40 perform wireless communication to control the increase amount and the decrease amount of a sound pressure signal set by the change amount setting unit 40.

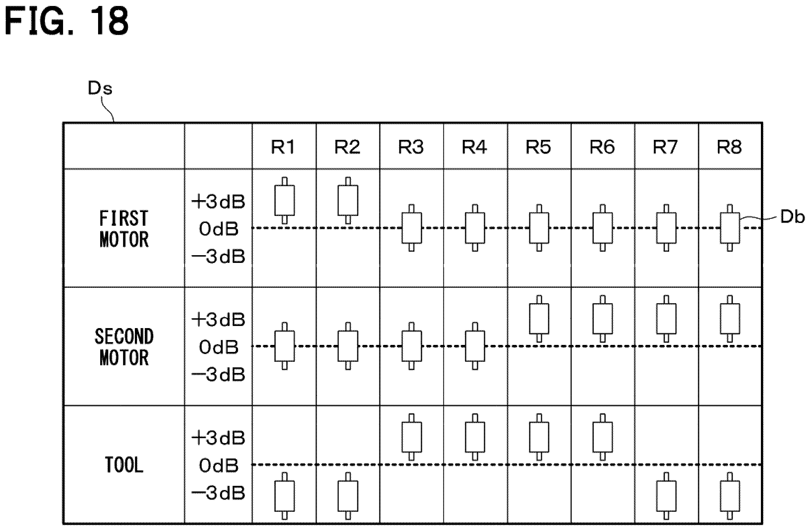

As illustrated in FIG. 18, the input device D includes a setting unit Ds having operation buttons Db. The input device D is configured to control, by operation of the operation buttons Db by the operator, an increase amount and a decrease amount of a sound pressure signal which is set by the change amount setting unit 40 for each of the first motor M1, the second motor M2, and the tool T as the component devices. The input device D controls an increase amount and a decrease amount of a sound pressure signal in each of the first to eighth frequency bands R1 to R8 set by the change amount setting unit 40.

For example, Fig. 18 illustrates a setting, when the abnormal sound emphasis unit 23 calculates the first motor emphasized characteristic Fm1, for increasing sound pressure signals in the first frequency band R1 and the second frequency band R2 as the first motor band RM1 by 3 dB using a predetermined increase amount as a reference. Based on the first motor band RM1 obtained from, for instance, a result of an experiment executed in advance before execution of abnormal sound detection, the operator sets an increase amount and a decrease amount when the abnormal sound emphasis unit 23 calculates the first motor emphasized characteristic Fm1.

Fig. 18 also illustrates a setting, when the abnormal sound emphasis unit 23 calculates the second motor emphasized characteristic Fm2, for increasing sound pressure signals in the fifth to eighth frequency bands R5 to R8 as the second motor band RM2 by 3 dB using a predetermined increase amount as a reference. Based on the second motor band RM2 obtained from, for instance, a result of an experiment executed in advance before execution of abnormal sound detection, the operator sets an increase amount and a decrease amount when the abnormal sound emphasis unit 23 calculates the second motor emphasized characteristic Fm2.

Fig. 18 also illustrates a setting, when the abnormal sound emphasis unit 23 calculates the cutting emphasized characteristic Fc, for increasing sound pressure signals in the third to sixth frequency bands R3 to R6 as the cutting band RC by 3 dB using a predetermined increase amount as a reference. Further, Fig. 18 illustrates a setting for decreasing sound pressure signals in the first frequency band R1, the second frequency band R2, the seventh frequency band R7, and the eighth frequency band R8 as bands different from the cutting band RC by -3 dB using a predetermined decrease amount as a reference.

Based on the cutting band RC obtained from, for instance, a result of an experiment executed in advance before execution of abnormal sound detection, the operator sets an increase amount and a decrease amount when the abnormal sound emphasis unit 23 calculates the cutting emphasized characteristic Fc.

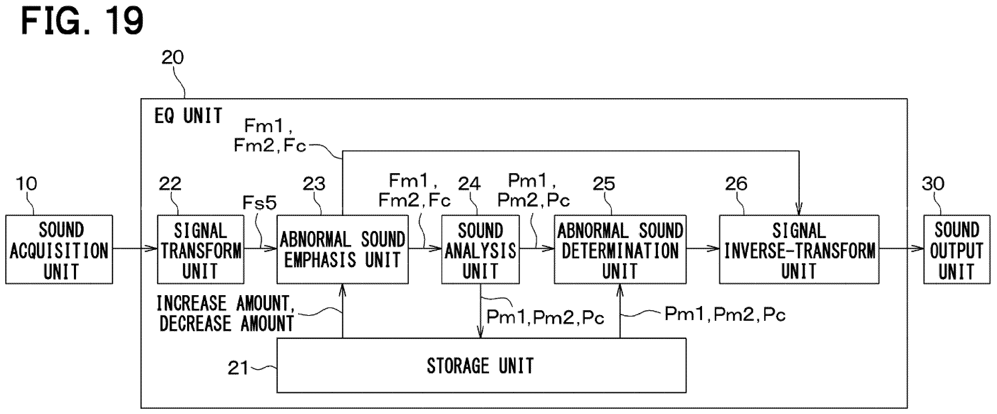

Hereinafter, the operation of the abnormal sound detection device 1 of the embodiment having the above-described configuration will be described with reference to FIG. 19. In the description of the operation of the embodiment with reference to FIG. 19, description of control process which is the same as that of the operation in the first embodiment described with reference to FIG. 8 or the operation in the second embodiment described with reference to FIG. 11 may be omitted.

When the frequency characteristic Fs5 transformed by the signal transform unit 22 is received, the abnormal sound emphasis unit 23 reads information of the increase amount and the decrease amount of each of the first motor emphasized characteristic Fm1, the second motor emphasized characteristic Fm2, and the cutting emphasized characteristic Fc stored in the storage unit 21. Based on the frequency characteristic Fs5 and the increase amount and the decrease amount of each of the first motor emphasized characteristic Fm1, the second motor emphasized characteristic Fm2, and the cutting emphasized characteristic Fc, the abnormal sound emphasis unit 23 emphasizes the intensity of sound pressure signals at frequencies related to abnormal sound in the frequencies in the frequency characteristic Fs5.

Concretely, the abnormal sound emphasis unit 23 obtains the first motor emphasized characteristic Fm1 obtained by emphasizing the intensity of the sound pressure signals in the first motor band RM1 relative to the frequency characteristic Fs5 transformed by the signal transform unit 22. The abnormal sound emphasis unit 23 also obtains the second motor emphasized characteristic Fm2 derived by emphasizing the intensity of the sound pressure signals in the second motor band RM2 relative to the frequency characteristic Fs5 transformed by the signal transform unit 22. The abnormal sound emphasis unit 23 also obtains the cutting emphasized characteristic Fc derived by emphasizing the intensity of the sound pressure signals in the cutting band RC relative to the frequency characteristic Fs5 transformed by the signal transform unit 22. In such a manner, the abnormal sound emphasis unit 23 obtains the first motor emphasized characteristic Fm1, the second motor emphasized characteristic Fm2, and the cutting emphasized characteristic Fc for each of the component devices.

In the embodiment, by input signals which are input from the input device D, the increase amounts and the decrease amounts of the sound pressure signals illustrated in FIG. 18 are set for each of the first motor emphasized characteristic Fm1, the second motor emphasized characteristic Fm2, and the cutting emphasized characteristic Fc.

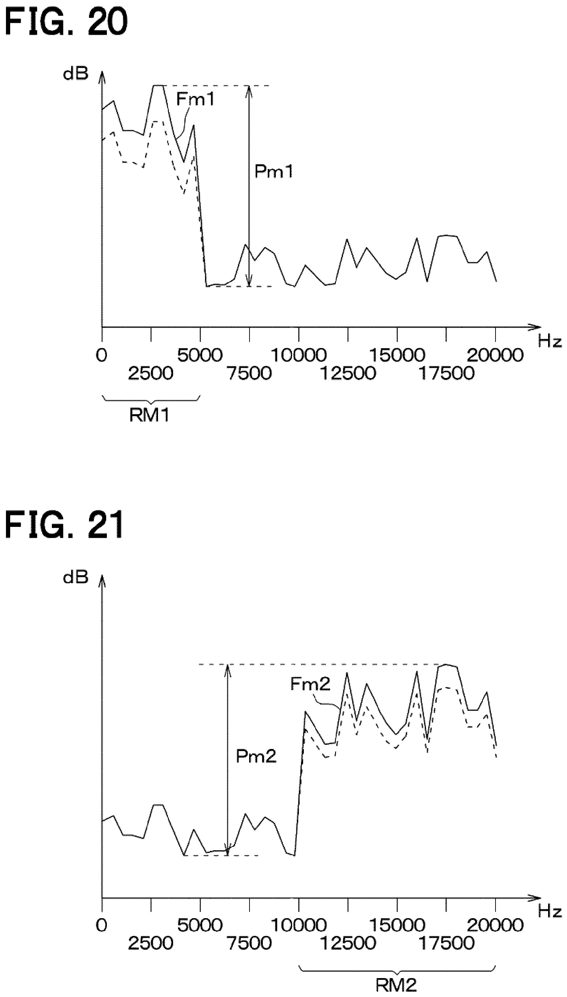

Consequently, in the first motor emphasized characteristic Fm1 obtained by the abnormal sound emphasis unit 23, the sound pressure signal in the first motor band RM1 is increased, as illustrated in FIG. 20, by the change amount setting unit 40 more than the first motor emphasized characteristic Fm1 illustrated in FIG. 13 in the second embodiment. Therefore, as compared with the case where the sound pressure signals in the first motor band RM1 are not increased by the change amount setting unit 40, in the first motor emphasized characteristic Fm1, the sound pressure signals at frequencies included in the operation sound of the first motor M1 are further emphasized. The broken line in FIG. 20 indicates the sound pressure signals in the case where the sound pressure signals in the first motor band RM1 in the first motor emphasized characteristic Fm1 are not emphasized by the change amount setting unit 40.

In the second motor emphasized characteristic Fm2 obtained by the abnormal sound emphasis unit 23, as illustrated in FIG. 21, the sound pressure signals in the second motor band RM2 are increased by the change amount setting unit 40 more than those in the second motor emphasized characteristic Fm2 illustrated in FIG. 14 in the second embodiment. Therefore, as compared with the case where the sound pressure signals in the second motor band RM2 are not increased by the change amount setting unit 40, in the second motor emphasized characteristic Fm2, the sound pressure signals at frequencies included in the operation sound of the second motor M2 are further emphasized. The broken line in FIG. 21 indicates the sound pressure signals in the case where the sound pressure signals in the second motor band RM2 in the second motor emphasized characteristic Fm2 are not emphasized by the change amount setting unit 40.

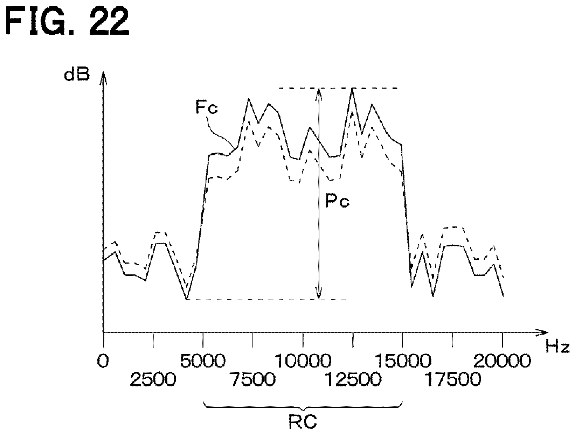

In the cutting emphasized characteristic Fc calculated by the abnormal sound emphasis unit 23, as illustrated in FIG. 22, the sound pressure signals in the cutting band RC are increased by the change amount setting unit 40 more than those in the cutting emphasized characteristic Fc illustrated in FIG. 15 in the second embodiment. Further, in the cutting emphasized characteristic Fc illustrated in FIG. 22, the sound pressure signals in the bands different from the cutting band RC are decreased by the change amount setting unit 40 as compared with those in the cutting emphasized characteristic Fc illustrated in FIG. 15 in the second embodiment.

Consequently, in the cutting emphasized characteristic Fc, the sound pressure signals at frequencies included in the operation sound at the time the tool T cuts an object to be cut are further emphasized as compared with the case where the sound pressure signals in the cutting band RC are not increased and the sound pressure signals in the bands different from the cutting band RC are not decreased by the change amount setting unit 40. The broken line in FIG. 22 indicates the sound pressure signals in the case where the sound pressure signals in the cutting band RC in the cutting emphasized characteristic Fc are not emphasized by the change amount setting unit 40.

The abnormal sound emphasis unit 23 outputs the information of each of the first motor emphasized characteristic Fm1, the second motor emphasized characteristic Fm2, and the cutting emphasized characteristic Fc to the sound analysis unit 24 and the signal inverse-transform unit 26.

When the information of the first motor emphasized characteristic Fm1, the second motor emphasized characteristic Fm2, and the cutting emphasized characteristic Fc is input from the abnormal sound emphasis unit 23, the sound analysis unit 24 obtains an abnormal sound feature amount of each of the first motor emphasized characteristic Fm1, the second motor emphasized characteristic Fm2, and the cutting emphasized characteristic Fc.

Concretely, the sound analysis unit 24 obtains an abnormal sound feature amount related to the intensity of the sound pressure signals in the first motor emphasized characteristic Fm1 as a first motor feature amount Pm1 as the absolute value of the difference between the maximum value and the minimum value of the sound pressure signals in the first motor emphasized characteristic Fm1. The sound analysis unit 24 obtains an abnormal sound feature amount related to the intensity of the sound pressure signals in the second motor emphasized characteristic Fm2 as a second motor feature amount Pm2 as the absolute value of the difference between the maximum value and the minimum value of the sound pressure signals in the second motor emphasized characteristic Fm2. Further, the sound analysis unit 24 obtains an abnormal sound feature amount related to the intensity of the sound pressure signals in the cutting emphasized characteristic Fc as a cutting feature amount Pc as the absolute value of the difference between the maximum value and the minimum value of the sound pressure signals in the cutting emphasized characteristic Fc.

The sound analysis unit 24 outputs the information of each of the first motor feature amount Pm1, the second motor feature amount Pm2, and the cutting feature amount Pc calculated to the storage unit 21 and the abnormal sound determination unit 25.

The storage unit 21 stores the information of each of the first motor feature amount Pm1, the second motor feature amount Pm2, and the cutting feature amount Pc input from the sound analysis unit 24.

When the information of each of the first motor feature amount Pm1, the second motor feature amount Pm2, and the cutting feature amount Pc is input, the abnormal sound determination unit 25 determines whether or not abnormal sound is included in the operation sound of the target apparatus P on the basis of the first motor feature amount Pm1, the second motor feature amount Pm2, and the cutting feature amount Pc.

Concretely, the abnormal sound determination unit 25 compares the first motor feature amount Pm1 obtained by the sound analysis unit 24 in a control cycle of this time with the first motor feature amount Pm1 obtained by the sound analysis unit 24 in the past and stored in the storage unit 21. The abnormal sound determination unit 25 compares the second motor feature amount Pm2 obtained by the sound analysis unit 24 in a control cycle of this time with the second motor feature amount Pm2 obtained by the sound analysis unit 24 in the past and stored in the storage unit 21. The abnormal sound determination unit 25 compares the cutting feature amount Pc obtained by the sound analysis unit 24 in the control cycle of this time with the cutting feature amount Pc obtained by the sound analysis unit 24 in the past and stored in the storage unit 21.

The first motor feature amount Pm1, the second motor feature amount Pm2, and the cutting feature amount Pc obtained by the sound analysis unit 24 in the past are, for example, the first motor feature amount Pm1, the second motor feature amount Pm2, and the cutting feature amount Pc obtained by the sound analysis unit 24 in the immediately preceding control cycle.

By calculating the difference of each of the first motor feature amounts Pm1, the second motor feature amounts Pm2, and the cutting feature amounts Pc on the basis of comparison results, the abnormal sound determination unit 25 obtains a time variation in each of the first motor feature amounts Pm1, the second motor feature amounts Pm2, and the cutting feature amounts Pc. On the basis of the time variation in each of the first motor feature amounts Pm1, the second motor feature amounts Pm2, and the cutting feature amounts Pc, the abnormal sound determination unit 25 determines whether or not abnormal sound is included in the operation sound of the target apparatus P.

Concretely, based on whether or not each of the change amount of the first motor feature amount Pm1, the change amount of the second motor feature amount Pm2, and the change amount of the cutting feature amount Pc is equal to or larger than a predetermined criterion value, the abnormal sound determination unit 25 determines whether or not abnormal sound is included in the operation sound of the component device.

In another embodiment, the predetermined criterion value is a reference value determined in advance by an experiment or the like to determine whether or not abnormal sound is included in the operation sound of each of the first motor M1, the second motor M2, and the tool T. The predetermined criterion values for determining whether or not abnormal sound is included in the operation sound of each of the first motor M1, the second motor M2, and the tool T may be set to different values respectively corresponding to the first motor M1, the second motor M2, and the tool T or the same value.

The abnormal sound determination unit 25 determines whether or not the value of each of the change amount of the first motor feature amount Pm1, the change amount of the second motor feature amount Pm2, and the change amount of the cutting feature amount Pc is equal to or larger than a predetermined criterion value.

In the case where the value of at least one of the change amount of the first motor feature amount Pm1, the change amount of the second motor feature amount Pm2, and the change amount of the cutting feature amount Pc is equal to or larger than a predetermined criterion value, the abnormal sound determination unit 25 determines that abnormal sound is included in the operation sound of the target apparatus P. The abnormal sound determination unit 25 determines, among the first motor M1, the second motor M2, and the tool T as the component devices of the target apparatus P, the component device in which the value of the change amount of the abnormal sound feature amount is equal to or larger than the predetermined criterion value as the cause of the abnormal sound generation.

On the other hand, when it is not determined that all of the change amount of the motor feature amount Pm1, the change amount of the second motor feature amount Pm2, and the change amount of the cutting feature amount Pc which are calculated are equal to or larger than the predetermined criterion value, the abnormal sound determination unit 25 determines that abnormal sound is not included in the operation sound of the target apparatus P.

As described above, the abnormal sound detection device 1 detecting abnormal sound of the target apparatus P having the first motor M1, the second motor M2, and the tool T as component devices has the sound analysis unit 24 obtaining each of the first motor feature amount Pm1, the second motor feature amount Pm2, and the cutting feature amount Pc as abnormal sound feature amounts of the component devices. The abnormal sound detection device 1 also has the storage unit 21 storing the first motor emphasized characteristic Fm1, the second motor emphasized characteristic Fm2, and the cutting emphasized characteristic Fc obtained for the respective component devices. The abnormal sound determination unit 25 determines whether or not abnormal sound is included in the operation sound of the target apparatus P on the basis of the first motor feature amount Pm1, the second motor feature amount Pm2, and the cutting feature amount Pc in the past, and the first motor feature amount Pm1, the second motor feature amount Pm2, and the cutting feature amount Pc obtained this time by the sound analysis unit 24.

In such a manner, without preliminarily analyzing the operation sound when the target apparatus P operates in the abnormal state by an experiment or the like, whether or not abnormal sound is included in the operation sound of the target apparatus P can be determined.

According to the invention, the following effects can be obtained.
(1) In the foregoing embodiment, the abnormal sound determination unit 25 determines whether or not abnormal sound is included in the operation sound of the target apparatus P on the basis of time variations in the first motor feature amount Pm1, the second motor feature amount Pm2, and the cutting feature amount Pc obtained by the sound analysis unit 24.
   Consequently, since whether or not abnormal sound is included in the operation sound of the target apparatus P on the basis of a change in the operation sounds of the component devices of the target apparatus P, the occurrence timing when abnormality occurs in the target apparatus P can be easily detected.
(2) According to the invention, the change amount setting unit 40 is provided which sets change amounts at the time of changing the intensities of sound pressure signals at frequencies in the first motor emphasized characteristic Fm1, the second motor emphasized characteristic Fm2, and the cutting emphasized characteristic Fc.

With the configuration, the sound pressure signals at the frequencies related to abnormal sound in each of the first motor emphasized characteristic Fm1, the second motor emphasized characteristic Fm2, and the cutting emphasized characteristic Fc can be easily emphasized at a desired magnitude. It makes the abnormal sound determination unit 25 easily determine whether or not abnormal sound is included in the operation sound of the target apparatus P. For example, when operation sound including abnormal sound is emitted to an operator to make the operator also perform an abnormal sound detecting work, the sound pressure signal of each of the first motor emphasized characteristic Fm1, the second motor emphasized characteristic Fm2, and the cutting emphasized characteristic Fc can be set to a desired magnitude in accordance with a demand of the operator himself/herself.

### (First modification to the invention)

According to the invention, the example that the change amount setting unit 40 can set an increase amount and a decrease amount of a sound pressure signal for one or plural bands out of the eight bands of the first to eighth frequency bands R1 to R8 has been described. However, the present disclosure is not limited to the example. For example, the number of bands for which the change amount setting unit 40 can set the increase amount and the decrease amount of the sound pressure signal may be smaller or larger than eight.

There is the possibility that when the number of bands for which the increase amount and the decrease amount of the sound pressure signal can be set by the change amount setting unit 40 is too small, it becomes difficult to emphasize the intensity of the sound pressure signals at the frequencies related to abnormal sound of the target apparatus P. When the number is too large, there is the possibility that the operation at the time of setting the increase amount and the decrease amount becomes troublesome. Consequently, the number of bands for which the increase amount and the decrease amount of the sound pressure signal can be set by the change amount setting unit 40 may be set to 8 to 12 where the intensity of the sound pressure signals at frequencies related to abnormal sound of the target apparatus P is easily emphasized and setting of the increase amount and the decrease amount is not troublesome.

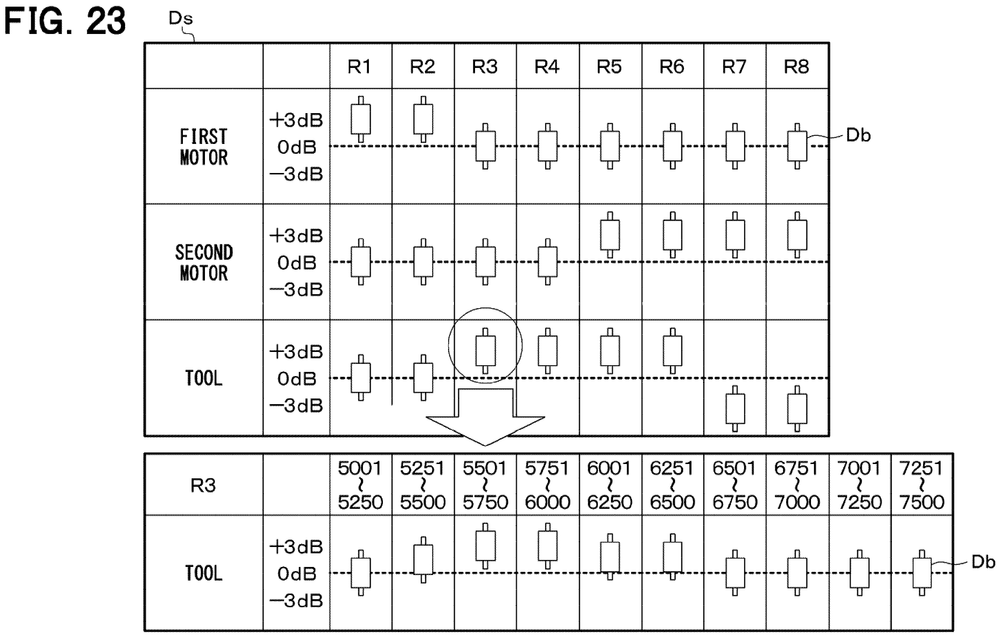

The change amount setting unit 40 may be configured, for example, so as to be able to set the increase amount and the decrease amount of the sound pressure signals at selected frequencies in one band selected from the eight bands, in each of bands which are more finely set. In this case, for example, as illustrated in FIG. 23, the change amount setting unit 40 may be configured to set the increase amount and the decrease amount of the sound pressure signal for each one or plural bands in ten bands which are set in advance in a selected one band.

### (Second modification to the invention)

According to the invention, the abnormal sound feature amount of the first motor emphasized characteristic Fm1 is obtained as the first motor feature amount Pm1 as the absolute value of the difference between the maximum value and the minimum value of the sound pressure signals of the first motor emphasized characteristic Fm1. The abnormal sound feature amount of the second motor emphasized characteristic Fm2 is obtained as the second motor feature amount Pm2 as the absolute value of the difference between the maximum value and the minimum value of the sound pressure signals of the second motor emphasized characteristic Fm2. Further, the abnormal sound feature amount of the cutting emphasized characteristic Fc is obtained as the cutting feature amount Pc as the absolute value of the difference between the maximum value and the minimum value of the sound pressure signals of the cutting emphasized characteristic Fc. However, the ways of obtaining the absolute sound feature amounts of the first motor emphasized characteristic Fm1, the second motor emphasized characteristic Fm2, and the cutting emphasized characteristic Fc are not limited to the above-described ones.

For example, as the abnormal sound feature amount of the first motor emphasized characteristic Fm1, the maximum value of the sound pressure signals of the first motor emphasized characteristic Fm1 may be employed. As the abnormal sound feature amount of the second motor emphasized characteristic Fm2, the maximum value of the sound pressure signals of the second motor emphasized characteristic Fm2 may be employed. As the abnormal sound feature amount of the cutting emphasized characteristic Fc, the maximum value of the sound pressure signals of the cutting emphasized characteristic Fc may be employed.

Alternatively, as the abnormal sound feature amount of the first motor emphasized characteristic Fm1, an average value of absolute values each of which is the difference of the maximum value and the minimum value of sound pressure signals of the first motor emphasized characteristic Fm1 in a predetermined sampling time may be employed. As the abnormal sound feature amount of the second motor emphasized characteristic Fm2, an average value of absolute values each of which is the difference of the maximum value and the minimum value of sound pressure signals of the second motor emphasized characteristic Fm2 in a predetermined sampling time may be employed. As the abnormal sound feature amount of the cutting emphasized characteristic Fc, an average value of absolute values each of which is the difference of the maximum value and the minimum value of sound pressure signals of the cutting emphasized characteristic Fc in a predetermined sampling time may be employed.

### (Third modification to the invention)

According to the invention, the example of performing the determination of whether or not abnormal sound is included in the operation sound of the target apparatus P on the basis of time variations in the first motor feature amount Pm1, the second motor feature amount Pm2, and the cutting feature amount Pc has been described. However, the present disclosure is not limited to the example. For example, the determination of whether or not abnormal sound is included in the operation sound of the target apparatus P may be performed on the basis of a result of statistical analysis on abnormal sound feature amounts of the first motor emphasized characteristic Fm1, the second motor emphasized characteristic Fm2, and the cutting emphasized characteristic Fc every predetermined sampling period. For the statistical analysis, for example, mixture gaussian distribution, Poisson distribution, normal distribution, or the like may be used.

### (Fourth modification to the invention)

According to the invention, the example of employing the first motor feature amount Pm1, the second motor feature amount Pm2, and the cutting feature amount Pc in the past as the first motor feature amount Pm1, the second motor feature amount Pm2, and the cutting feature amount Pc in the immediately preceding control cycle has been described. However, the present disclosure is not limited to the example. For example, as the first motor feature amount Pm1, the second motor feature amount Pm2, and the cutting feature amount Pc obtained in the past by the sound analysis unit 24, an average value of the first motor feature amounts Pm1, an average value of the second motor feature amounts Pm2, and an average value of the cutting feature amounts Pc, those feature amounts being calculated in predetermined sampling time may be employed, respectively.

### (Other embodiments)

Although representative embodiments of the present disclosure have been described above, the present disclosure is not limited to the foregoing embodiments but can be variously modified, for example, as follows.

In the foregoing first embodiment, the example that the abnormal sound detection device 1 has the signal inverse-transform unit 26 transforming the abnormal sound emphasized characteristic Fs3 to a time signal, and the speaker 50 generating sound obtained by emphasizing anormal sound in the operation sound of the target apparatus P has been described. However, the present disclosure is not limited to the example. For example, the abnormal sound detection device 1 may have a configuration which does not include the signal inverse-transform unit 26 transforming the abnormal sound emphasized characteristic Fs3 to a time signal and the speaker 50 generating sound obtained by emphasizing abnormal sound in the operation sound of the target apparatus P.

In the foregoing embodiment, the example that the abnormal sound emphasis unit 23 increases the intensity of a sound pressure signal only by a predetermined increase amount at the time of performing increase adjustment and decreases the intensity of a sound pressure signal only by a predetermined decrease amount at the time of performing decrease adjustment has been described. However, the present disclosure is not limited to the example. At the time of performing the increase adjustment, by multiplying a sound pressure signal at an abnormal sound frequency Fa with a predetermined coefficient, the abnormal sound emphasis unit 23 may set the sound pressure signal at the abnormal sound frequency Fa to be larger than the sound pressure signal which is before the multiplication. At the time of performing the decrease adjustment, by multiplying a sound pressure signal at a normal frequency Fn with a predetermined coefficient, the abnormal sound emphasis unit 23 may set the sound pressure signal at the normal frequency Fn to be smaller than the sound pressure signal which is before the multiplication.

In the foregoing second and and according to the invention, the example that the abnormal sound emphasis unit 23 increases and decreases sound pressure signals in one or plural bands out of eight bands obtained by dividing 0 to 20000 Hz every equal frequencies of 2500 Hz has been described. However, the present disclosure is not limited to the example. For example, the abnormal sound emphasis unit 23 may increase and decrease sound pressure signals in one or plural bands out of bands obtained by dividing 0 to 20000 Hz every bands each having a size different from 2500 Hz. The abnormal sound emphasis unit 23 may increase and decrease sound pressure signals in one or plural bands obtained by dividing 0 to 20000 Hz by octave bands or 1/3 octave bands in the case where the center frequency is set to 10000 Hz.

In the foregoing second embodiment and the invention, the example that the abnormal sound detection device 1 performs determination of whether or not abnormal sound is included in operation sound including the first motor sound, the second motor sound, and the cutting sound generated at the same time when the target apparatus P performs cutting process has been described. However, the present disclosure is not limited to the example.

For example, the abnormal sound detection device 1 may perform determination of whether or not abnormal sound is included in each of operation sounds each including the first motor sound, the second motor sound, and the cutting sound generated at timings different from one another when the target apparatus P performs cutting process.

Obviously, the components of the foregoing embodiments are not always necessary except for the case where it is explicitly written that the components are necessary, the case where the components are considered to be apparently necessary in principle, and the like.

In the foregoing embodiments, in the case where numerical values such as the number of components of the embodiments, numerical values, amounts, ranges, and the like are mentioned, the present disclosure is not limited to the specific numbers except for the case where it is explicitly written that the numerical value is necessary, the case where a specific number is obviously limited in principle, and the like.

In the foregoing embodiments, at the time of referring to a shape, a positional relation, or of a component, except for the case where it is explicitly mentioned, the case where a specific shape or a positional relation is limited in principle, the present disclosure is not limited to the shape, the positional relation. The scope of the invention is defined by the appended claims.

## Claims

1. An abnormal sound detection device that is configured to detect abnormal sound in operation sound of a target apparatus that is a target object for inspection, the device comprising:
a sound acquisition unit (10) that is configured to obtain the operation sound of the target apparatus as a sound pressure time signal that is a time signal indicative of a time variation in intensity of sound pressure signals;
a signal transform unit (22) that is configured to transform the sound pressure time signal to a frequency characteristic indicative of intensity of the sound pressure signals at respective frequencies;
an abnormal sound emphasis unit (23) that is configured to obtain, based on the frequency characteristic, an abnormal sound emphasized signal obtained by emphasizing intensity of a sound pressure signal at a frequency in association with the abnormal sound of the target apparatus among the sound pressure signals at the respective frequencies in the frequency characteristic;
an abnormal sound determination unit (25) that is configured to determine whether the abnormal sound is included in the operation sound of the target apparatus based on the abnormal sound emphasized signal;
a sound analysis unit (24) that is configured to obtain an abnormal sound feature amount indicative of a feature related to intensity of a sound pressure signal in the abnormal sound emphasized signal;
a storage unit (21) that is configured to store the abnormal sound feature amount;
and
a change amount setting unit (40) that is configured to set a change amount for the abnormal sound emphasis unit to change a sound pressure signal at each frequency in the frequency characteristic when obtaining the abnormal sound emphasized signal, wherein
the abnormal sound emphasis unit is further configured to obtain the abnormal sound emphasized signal by performing at least increase adjustment of increasing intensity of a sound pressure signal at a frequency estimated to be included in the abnormal sound of the target apparatus among the sound pressure signals at the respective frequencies in the frequency characteristic among (i) the increase adjustment and (ii) decrease adjustment of decreasing intensity of sound pressure signals at frequencies different from the frequency estimated to be included in the abnormal sound of the target apparatus,
the target apparatus has a plurality of component devices (M1, M2, and C),
the abnormal sound emphasis unit is further configured to obtain the abnormal sound emphasized signal for each of the plurality of component devices by emphasizing intensity of a sound pressure signal at a frequency, among sound pressure signals at respective frequencies in the frequency characteristic, that is included in the operation sound when each of the plurality of component devices operates in a normal state,
the sound analysis unit is further configured to obtain the abnormal sound feature amount for each of the plurality of component devices based on the abnormal sound emphasized signal obtained for each of the plurality of component devices by the abnormal sound emphasis unit, and
the abnormal sound determination unit is further configured to determine whether the abnormal sound is included in the operation sound of the target apparatus based on the abnormal sound feature amount for each of the plurality of component devices that was previously obtained and is stored in the storage unit and the abnormal sound feature amount for each of the plurality of component devices that is currently obtained by the sound analysis unit.

2. The abnormal sound detection device according to claim 1, wherein
the storage unit (21) is further configured to store, in advance, abnormal sound information as information related to the abnormal sound included in the operation sound of the target apparatus,
the abnormal sound determination unit is further configured to determine whether the abnormal sound is included in the operation sound of the target apparatus based on the abnormal sound emphasized signal and the stored abnormal sound information.

3. The abnormal sound detection device according to claim 2, wherein
the abnormal sound information is set based on the operation sound generated from the target apparatus that is operating in an abnormal state.

4. The abnormal sound detection device according to claim 2, wherein
the abnormal sound information is set based on an operation sound generated from each of the plurality of component devices that is operating,
sound pressure signals at frequencies, among the sound pressure signals at the respective frequencies in the frequency characteristic, that are included in the operation sounds of the plurality of component devices are stored in the storage unit, and
the abnormal sound emphasis unit is further configured to obtain the abnormal sound emphasized signal for each of the plurality of component devices by emphasizing intensity of each of the sound pressure signals stored in the storage unit.

5. The abnormal sound detection device according to any one of claims 2 to 4, wherein
the abnormal sound information indicates the operation sound including the abnormal sound of the target apparatus with intensity of sound pressure signals at respective frequencies by emphasizing intensity of a sound signal at a frequency, among the sound signals at the respective frequencies, that is estimated to be included in the abnormal sound of the target apparatus,
the storage unit is configured to store, as the abnormal sound information, an estimated feature amount indicative of a feature related to intensity of the sound pressure signal of the abnormal sound information, and
the abnormal sound determination unit is further configured to determine whether the abnormal sound is included in the operation sound of the target apparatus based on the abnormal sound feature amount and the estimated feature amount.

6. The abnormal sound detection device according to any one of claims 1 to 5, further comprising:
a signal inverse-transform unit (26) that is configured to transform the abnormal sound emphasized signal to an emphasized sound signal as a time signal indicative of a time variation of intensity of a sound pressure signal; and
a sound generation unit (50) that is configured to generate a sound by emphasizing the abnormal sound of the target apparatus relative to the operation sound of the target apparatus based on the emphasized sound signal.

## Patentansprüche

1. Vorrichtung zur Erkennung von abnormalen Geräuschen, die konfiguriert ist, um ein abnormales Geräusch in einem Betriebsgeräusch einer Zielvorrichtung zu erkennen, die ein Zielobjekt für eine Überprüfung ist, wobei die Vorrichtung aufweist:
eine Geräuscherfassungseinheit (10), die konfiguriert ist, um das Betriebsgeräusch der Zielvorrichtung als ein Schalldruck-Zeitsignal zu erhalten, das ein Zeitsignal ist, das eine zeitliche Änderung in der Intensität von Schalldrucksignalen angibt;
eine Signalwandlungseinheit (22), die konfiguriert ist, um das Schalldruck-Zeitsignal in eine Frequenzcharakteristik umzuwandeln, die die Intensität der Schalldrucksignale bei jeweiligen Frequenzen angibt;
eine Abnormales-Geräusch-Hervorhebungseinheit (23), die konfiguriert ist, um auf der Grundlage der Frequenzcharakteristik ein Abnormales-Geräusch-Hervorhebungssignal zu erhalten, das durch Hervorheben der Intensität eines Schalldrucksignals bei einer Frequenz in Verbindung mit dem abnormalen Geräusch der Zielvorrichtung unter den Schalldrucksignalen bei den jeweiligen Frequenzen in der Frequenzcharakteristik erhalten wird;
eine Abnormales-Geräusch-Bestimmungseinheit (25), die konfiguriert ist, um auf der Grundlage des Abnormales-Geräusch-Hervorhebungssignals zu bestimmen, ob das abnormale Geräusch im Betriebsgeräusch der Zielvorrichtung enthalten ist;
eine Geräuschanalyseeinheit (24), die konfiguriert ist, um einen Abnormales-Geräusch-Merkmalsbetrag zu erhalten, der ein Merkmal in Bezug auf die Intensität eines Schalldrucksignals im Abnormales-Geräusch-Hervorhebungssignal angibt;
eine Speichereinheit (21), die konfiguriert ist, um den Abnormales-Geräusch-Merkmalsbetrag zu speichern; und
eine Änderungsbetrag-Festlegungseinheit (40), die konfiguriert ist, um einen Änderungsbetrag für die Abnormales-Geräusch-Hervorhebungseinheit festzulegen, um ein Schalldrucksignal bei jeder Frequenz in der Frequenzcharakteristik zu ändern, wenn das Abnormales-Geräusch-Hervorhebungssignal erhalten wird, wobei
die Abnormales-Geräusch-Hervorhebungseinheit ferner konfiguriert ist, um das Abnormales-Geräusch-Hervorhebungssignal zu erhalten, indem sie zumindest eine Erhöhungseinstellung der Intensität eines Schalldrucksignals bei einer Frequenz durchführt, die schätzungsweise im abnormalen Geräusch der Zielvorrichtung enthalten ist, unter den Schalldrucksignalen bei den jeweiligen Frequenzen in der Frequenzcharakteristik, von (i) der Erhöhungseinstellung und (ii) einer Verringerungseinstellung der Intensität von Schalldrucksignalen bei Frequenzen, die sich von der Frequenz unterscheiden, die schätzungsweise im abnormalen Geräusch der Zielvorrichtung enthalten ist,
die Zielvorrichtung mehrere Komponentenvorrichtungen (M1, M2 und C) enthält,
die Abnormales-Geräusch-Hervorhebungseinheit ferner konfiguriert ist, um das Abnormales-Geräusch-Hervorhebungssignal für jede der mehreren Komponentenvorrichtungen zu erhalten, indem sie die Intensität eines Schalldrucksignals bei einer Frequenz unter Schalldrucksignalen bei jeweiligen Frequenzen in der Frequenzcharakteristik hervorhebt, die im Betriebsgeräusch enthalten ist, wenn jede der mehreren Komponentenvorrichtungen in einem normalen Zustand arbeitet,
die Geräuschanalyseeinheit ferner konfiguriert ist, um den Abnormales-Geräusch-Merkmalsbetrag für jede der mehreren Komponentenvorrichtungen auf der Grundlage des Abnormales-Geräusch-Hervorhebungssignals zu erhalten, das für jede der mehreren Komponentenvorrichtungen durch die Abnormales-Geräusch-Hervorhebungseinheit erhalten wurde, und
die Abnormales-Geräusch-Bestimmungseinheit ferner konfiguriert ist, um auf der Grundlage des zuvor erhaltenen und in der Speichereinheit gespeicherten Abnormales-Geräusch-Merkmalsbetrags für jede der mehreren Komponentenvorrichtungen und des aktuell von der Geräuschanalyseeinheit erhaltenen Abnormales-Geräusch-Merkmalsbetrags für jede der mehreren Komponentenvorrichtungen zu bestimmen, ob das abnormale Geräusch im Betriebsgeräusch der Zielvorrichtung enthalten ist.

2. Vorrichtung zur Erkennung von abnormalen Geräuschen nach Anspruch 1, wobei
die Speichereinheit (21) ferner konfiguriert ist, um im Voraus Abnormales-Geräusch-Information als Information in Bezug auf das im Betriebsgeräusch der Zielvorrichtung enthaltene abnormale Geräusch zu speichern, und
die Abnormales-Geräusch-Bestimmungseinheit ferner konfiguriert ist, um auf der Grundlage des Abnormales-Geräusch-Hervorhebungssignals und der gespeicherten Abnormales-Geräusch-Information zu bestimmen, ob das abnormale Geräusch im Betriebsgeräusch der Zielvorrichtung enthalten ist.

3. Vorrichtung zur Erkennung von abnormalen Geräuschen nach Anspruch 2, wobei
die Abnormales-Geräusch-Information auf der Grundlage des Betriebsgeräuschs festgelegt wird, das von der Zielvorrichtung erzeugt wird, die in einem abnormalen Zustand arbeitet.

4. Vorrichtung zur Erkennung von abnormalen Geräuschen nach Anspruch 2, wobei
die Abnormales-Geräusch-Information auf der Grundlage eines Betriebsgeräuschs festgelegt wird, das von jeder der mehreren Komponentenvorrichtungen erzeugt wird, die in Betrieb sind,
Schalldrucksignale bei Frequenzen unter Schalldrucksignalen bei den jeweiligen Frequenzen in der Frequenzcharakteristik, die in den Betriebsgeräuschen der mehreren Komponentenvorrichtungen enthalten sind, in der Speichereinheit gespeichert werden, und
die Abnormales-Geräusch-Hervorhebungseinheit ferner konfiguriert ist, um das Abnormales-Geräusch-Hervorhebungssignal für jede der mehreren Komponentenvorrichtungen zu erhalten, indem sie die Intensität jedes der in der Speichereinheit gespeicherten Schalldrucksignale hervorhebt.

5. Vorrichtung zur Erkennung von abnormalen Geräuschen nach einem der Ansprüche 2 bis 4, wobei
die Abnormales-Geräusch-Information das Betriebsgeräusch einschließlich des abnormalen Geräuschs der Zielvorrichtung mit der Intensität von Schalldrucksignalen bei jeweiligen Frequenzen angibt, indem die Intensität eines Geräuschsignals bei einer Frequenz unter den Geräuschsignalen bei den jeweiligen Frequenzen hervorgehoben wird, von der angenommen wird, dass sie im abnormalen Geräusch der Zielvorrichtung enthalten ist,
die Speichereinheit konfiguriert ist, um als die Abnormales-Geräusch-Information einen geschätzten Merkmalsbetrag zu speichern, der ein Merkmal in Bezug auf die Intensität des Schalldrucksignals der Abnormales-Geräusch-Information angibt, und
die Abnormales-Geräusch-Bestimmungseinheit ferner konfiguriert ist, um auf der Grundlage des Abnormales-Geräusch-Merkmalsbetrags und des geschätzten Merkmalsbetrags zu bestimmen, ob das abnormale Geräusch im Betriebsgeräusch der Zielvorrichtung enthalten ist.

6. Vorrichtung zur Erkennung von abnormalen Geräuschen nach einem der Ansprüche 1 bis 5, ferner aufweisend:
eine Signalrückwandlungseinheit (26), die konfiguriert ist, um das Abnormales-Geräusch-Hervorhebungssignal in ein Hervorgehobenes-Geräusch-Signal als ein Zeitsignal zu wandeln, das eine zeitliche Änderung der Intensität eines Schalldrucksignals angibt; und
eine Geräuscherzeugungseinheit (50), die konfiguriert ist, um ein Geräusch zu erzeugen, indem sie das abnormale Geräusch der Zielvorrichtung im Verhältnis zum Betriebsgeräusch der Zielvorrichtung auf der Grundlage des Hervorgehobenes-Geräusch-Signals hervorhebt.

## Revendications

1. Dispositif de détection de son anormal qui est configuré pour détecter un son anormal dans un son de fonctionnement d'un appareil cible qui est un objet cible d'inspection, le dispositif comprenant :
une unité d'acquisition de son (10) qui est configurée pour obtenir le son de fonctionnement de l'appareil cible sous la forme d'un signal temporel de pression de son qui est un signal temporel indiquant une variation temporelle de l'intensité de signaux de pression de son ;
une unité de transformation de signal (22) qui est configurée pour transformer le signal temporel de pression de son en une caractéristique de fréquence indicative de l'intensité des signaux de pression de son à des fréquences respectives ;
une unité d'accentuation de son anormal (23) qui est configurée pour obtenir, sur la base de la caractéristique de fréquence, un signal de son anormal accentué obtenu en accentuant l'intensité d'un signal de pression de son à une fréquence en association avec le son anormal de l'appareil cible parmi les signaux de pression de son aux fréquences respectives dans la caractéristique de fréquence ;
une unité de détermination de son anormal (25) qui est configurée pour déterminer si le son anormal est inclus dans le son de fonctionnement de l'appareil cible sur la base du signal de son anormal accentué ;
une unité d'analyse de son (24) qui est configurée pour obtenir une quantité de caractéristique de son anormal indiquant une caractéristique liée à l'intensité d'un signal de pression de son dans le signal de son anormal accentué ;
une unité de stockage (21) qui est configurée pour stocker la quantité de caractéristique de son anormal ; et
une unité de définition de quantité de changement (40) qui est configurée pour définir une quantité de changement pour l'unité d'accentuation de son anormal afin de modifier un signal de pression de son à chaque fréquence dans la caractéristique de fréquence lors de l'obtention du signal de son anormal accentué, dans lequel
l'unité d'accentuation de son anormal est en outre configurée pour obtenir le signal de son anormal accentué en réalisant au moins un ajustement d'augmentation consistant à augmenter l'intensité croissante d'un signal de pression de son à une fréquence estimée comme étant incluse dans le son anormal de l'appareil cible parmi les signaux de pression de son aux fréquences respectives dans la caractéristique de fréquence parmi (i) l'ajustement d'augmentation et (ii) un ajustement de diminution consistant à diminuer l'intensité de signaux de pression de son à des fréquences différentes de la fréquence estimée comme étant incluse dans le son anormal de l'appareil cible,
l'appareil cible présente une pluralité de dispositifs composants (M1, M2 et C),
l'unité d'accentuation de son anormal est en outre configurée pour obtenir le signal de son anormal accentué pour chacun de la pluralité de dispositifs composants en accentuant l'intensité d'un signal de pression de son à une fréquence, parmi des signaux de pression de son à des fréquences respectives dans la caractéristique de fréquence, qui est incluse dans le son de fonctionnement lorsque chacun de la pluralité de dispositifs composants fonctionne dans un état normal,
l'unité d'analyse de son est en outre configurée pour obtenir la quantité de caractéristique de son anormal pour chacun de la pluralité de dispositifs composants sur la base du signal de son anormal accentué obtenu pour chacun de la pluralité de dispositifs composants par l'unité d'accentuation de son anormal, et
l'unité de détermination de son anormal est en outre configurée pour déterminer si le son anormal est inclus dans le son de fonctionnement de l'appareil cible sur la base de la quantité de caractéristique de son anormal pour chacun de la pluralité de dispositifs composants qui a été précédemment obtenue et est stockée dans l'unité de stockage et de la quantité de caractéristique de son anormal pour chacun de la pluralité de dispositifs composants qui est actuellement obtenue par l'unité d'analyse de son.

2. Dispositif de détection de son anormal selon la revendication 1, dans lequel
l'unité de stockage (21) est en outre configurée pour stocker, à l'avance, des informations de son anormal en tant qu'informations liées au son anormal inclus dans le son de fonctionnement de l'appareil cible,
l'unité de détermination de son anormal est en outre configurée pour déterminer si le son anormal est inclus dans le son de fonctionnement de l'appareil cible sur la base du signal de son anormal accentué et des informations de son anormal stockées.

3. Dispositif de détection de son anormal selon la revendication 2, dans lequel
les informations de son anormal sont définies en fonction du son de fonctionnement généré par l'appareil cible qui fonctionne dans un état anormal.

4. Dispositif de détection de son anormal selon la revendication 2, dans lequel
les informations de son anormal sont définies sur la base d'un son de fonctionnement généré par chacun de la pluralité de dispositifs composants en fonctionnement,
des signaux de pression de son à des fréquences, parmi les signaux de pression de son aux fréquences respectives dans la caractéristique de fréquence, qui sont inclus dans les sons de fonctionnement de la pluralité de dispositifs composants sont stockés dans l'unité de stockage, et
l'unité d'accentuation de son anormal est en outre configurée pour obtenir le signal de son anormal accentué pour chacun de la pluralité de dispositifs composants en accentuant l'intensité de chacun des signaux de pression de son stockés dans l'unité de stockage.

5. Dispositif de détection de son anormal selon l'une quelconque des revendications 2 à 4, dans lequel
les informations de son anormal indiquent le bruit de fonctionnement incluant le son anormal de l'appareil cible avec l'intensité de signaux de pression de son à des fréquences respectives en accentuant l'intensité d'un signal de son à une fréquence, parmi les signaux de son aux fréquences respectives, qui est estimée être incluse dans le son anormal de l'appareil cible,
l'unité de stockage est configurée pour stocker, en tant qu'informations de son anormal, une quantité de caractéristique estimée indiquant une caractéristique liée à l'intensité du signal de pression de son des informations de son anormal, et
l'unité de détermination de son anormal est en outre configurée pour déterminer si le son anormal est inclus dans le son de fonctionnement de l'appareil cible sur la base de la quantité de caractéristique de son anormal et de la quantité de caractéristique estimée.

6. Dispositif de détection de son anormal selon l'une quelconque des revendications 1 à 5, comprenant en outre :
une unité de transformation inverse de signal (26) qui est configurée pour transformer le signal de son anormal accentué en un signal de son accentué sous la forme d'un signal temporel indiquant une variation temporelle de l'intensité d'un signal de pression de son ; et
une unité de génération de son (50) qui est configurée pour générer un son en accentuant le son anormal de l'appareil cible par rapport au son de fonctionnement de l'appareil cible sur la base du signal de son accentué.
